# EUROPÄISCHE PATENTSCHRIFT

(11) **EP 3 262 668 B1**
(45) Veröffentlichungstag und Bekanntmachung des Hinweises auf die Patenterteilung: **05.12.2018**
(21) Anmeldenummer: 16750794.6
(22) Anmeldetag: 08.08.2016
(51) Int. Cl.: H01G 11/48, H01M 4/60, C08F 12/22

(54) **VERWENDUNG BESTIMMTER POLYMERE ALS LADUNGSSPEICHER**
USE OF CERTAIN POLYMERS AS A CHARGE STORE
UTILISATION DE CERTAINS POLYMÈRES COMME ACCUMULATEURS DE CHARGES

(30) Priorität: 26.08.2015 EP 15182449
(43) Veröffentlichungstag der Anmeldung: 03.01.2018
(73) Patentinhaber: Evonik Degussa GmbH, 45128 Essen (DE)
(72) Erfinder: SCHUBERT, Ulrich, 07743 Jena (DE); WILD, Andreas, 45721 Haltern am See (DE); HÄUPLER, Bernhard, 95032 Hof (DE)
(86) Internationale Anmeldenummer: PCT/EP2016/068865
(87) Internationale Veröffentlichungsnummer: WO 2017/032583

(56) Entgegenhaltungen:
- EP-A2- 1 128 453
- US-A1- 2014 048 786
- PETER NESVADBA ET AL: "Synthesis of a polymeric 2,5-di--butyl-1,4-dialkoxybenzene and its evaluation as a novel cathode material", SYNTHETIC METALS, ELSEVIER SEQUOIA, LAUSANNE, CH, Bd. 161, Nr. 3, 18. November 2010 (2010-11-18), Seiten 259-262, XP028151505, ISSN: 0379-6779, DOI: 10.1016/J.SYNTHMET.2010.11.030 [gefunden am 2010-11-29] in der Anmeldung erwähnt
- WEI WENG ET AL: "Smart Polymeric Cathode Material with Intrinsic Overcharge Protection Based on a 2,5-Di-tert-butyl- 1,4-dimethoxybenzene Core Structure", ADVANCED FUNCTIONAL MATERIALS, WILEY - V C H VERLAG GMBH & CO. KGAA, DE, Bd. 22, Nr. 21, 7. November 2012 (2012-11-07), Seiten 4485-4492, XP001581908, ISSN: 1616-301X, DOI: DOI: 10.1002/ADFM.201200458 [gefunden am 2012-06-25] in der Anmeldung erwähnt
- BEY.P.S. ET AL: "Effect of a novel copolymer on cuticle sclerotization by the american cockroach", JOURNAL OF BIOACTIVE AND COMPATIBLE POLYMERS, Bd. 2, Oktober 1987 (1987-10), Seiten 312-323, XP008178878,
- SAITO Y ET AL: "Synthesis of poly(dihydroxystyrene-block-styrene) (PDHSt-b-PSt) by the RAFT process and preparation of organic-solvent-dispersive Ag NPs by automatic reduction of metal ions in the presence of PDHSt-b-PSt", CHEMICAL COMMUNICATIONS, Bd. 51, 8. Dezember 2014 (2014-12-08), Seiten 3743-3746, XP002753885, DOI: 10.1039/c4cc08366k

## Beschreibung

Die vorliegende Erfindung betrifft Polymere sowie deren Verwendung in Form von aktivem Elektrodenmaterial oder in einem Elektrodenslurry als elektrische Ladungsspeicher, wobei die elektrischen Ladungsspeicher insbesondere Sekundärbatterien sind. Diese Sekundärbatterien zeichnen sich insbesondere durch hohe Zellspannungen, große Leistungsdichten sowie einfache und skalierbare Verarbeitungs- und Herstellungsmethoden (zum Beispiel mittels Siebdruck) aus.

### Hintergrund der Erfindung

Organische Batterien sind elektrochemische Zellen, die ein organisches Ladungsspeicherungsmaterial als aktives Elektrodenmaterial zur Speicherung von elektrischer Ladung verwenden. Diese Sekundärbatterien zeichnen sich durch ihre besonderen Eigenschaften, wie Schnellladefähigkeit, hohe Lebensdauer, geringes Gewicht, hohe Flexibilität und einfache Verarbeitbarkeit aus. Als aktives Elektrodenmaterialien zur Ladungsspeicherung sind im Stand der Technik verschiedene polymere Strukturen beschrieben worden, so zum Beispiel polymere Verbindungen mit organischen Nitroxidradikalen als aktiven Einheiten (beispielsweise in WO 2012133202 A1, WO 2012133204 A1, WO 2012120929 A1, WO 2012153866 A1, WO 2012153865 A1, JP 2012-221574 A, JP 2012-221575 A, JP 2012-219109 A, JP 2012-079639 A, WO 2012029556 A1, WO 2012153865 A1, JP 2011-252106 A, JP 2011-074317 A, JP 2011-165433 A, WO 2011034117 A1, WO 2010140512 A1, WO 2010104002 A1, JP 2010-238403 A, JP 2010-163551 A, JP 2010-114042 A, WO 2010002002 A1, WO 2009038125 A1, JP 2009-298873 A, WO 2004077593 A1, WO 2009145225 A1, JP 2009-238612 A, JP 2009-230951 A, JP 2009-205918 A, JP 2008-234909 A, JP 2008-218326 A, WO 2008099557 A1, WO 2007141913 A1, US 20020041995 A1, EP 1128453 A2; A. Vlad, J. Rolland, G. Hauffman, B. Ernould, J.-F. Gohy, ChemSusChem 2015, 8, 1692 - 1696) oder polymere Verbindungen mit organischen Phenoxylradikalen oder Galvinoxylradikalen als aktiven Einheiten (zum Beispiel US 2002/0041995 A1, JP 2002-117852 A).

EP 1128453 A beschreibt polymere Materialien, welche radikalische Sauerstoffgruppen wie Nitroxidfunktionen oder sterisch abgeschirmte Oxyfunktionen aufweisen und in Batterien eingesetzt werden.

US 2014/0048786 A1 beschreibt eine Elektrode umfassend bestimmte Verbindungen zum Einsatz in photoelektrischen Elementen. Dabei werden auch organische Polymere genannt, welche in der Elektrode zum Einsatz kommen können und redoxaktive Gruppen wie Chinon, Polyimide, Polyviologene etc. aufweisen können.

P.S. Bey et al. Journal of Bioactive and Compatible Polymers 1987, 2, 312 - 324 beschreibt die Synthese und *in vivo*-Studien eines Copolymers aus Katechol und Bernsteinsäure.

Y. Saito & H. Yabu, ChemComm 2015, 51 3743 - 3747 beschreiben ein anderes Blockcopolymer, welches ebenfalls Katecholgruppen umfasst.

Auch polymere Verbindungen mit Chinonen (beispielsweise JP 2009-217992 A,

WO 2013/099567 A1, WO 2011/068217 A1), mit Dionen (beispielsweise JP 2010-212152 A), sowie mit Dicyanodiiminen (beispielsweise JP 2012-190545 A, JP 2010-55923 A) als aktive Einheiten zur Ladungsspeicherung sind bekannt.

Auch Polymere, welche Dialkoxybenzol aufweisen, sind im Stand der Technik für eine Vielzahl verschiedener Anwendungen beschrieben. Dazu gehört ihre Anwendung als Epoxidharze zum Verschließen von Halbleitermodulen (zum Beispiel beschrieben in JP 2013098217 A,

JP 2012224758 A, JP 2011231153 A, JP 2011138037 A, JP 2010282154 A, JP 2010266556 A, JP 2010077303 A, JP 2008296436 A oder WO 2004098745 A1). Weiterhin wurden dialkoxybenzolhaltige, nicht-polymere Verbindungen als "*redox-shuttle*" Additive für Li-lonen Batterien verwendet, um ein Überladen der Li-Batterie zu verhindern (WO 2011/149970 A2). Daneben wird auch die Verwendung bestimmter Polymere auf Basis von Dialkoxybenzolen als elektrische Ladungsspeicher beschrieben (P. Nesvadba, L. B. Folger, P. Maire, P. Novak, Synth. Met. 2011, 161, 259-262, im Folgenden abgekürzt als "Nesvadba *et a*/."; W. Weng, Z. C. Zhang, A. Abouimrane, P. C. Redfern, L. A. Curtiss, K. Amine, Adv. Funct. Mater. 2012, 22, 4485-4492, im Folgenden abgekürzt als "Weng *et al*.")*.* Diese von Nesvadba *et al.* und Weng *et al.* beschriebenen Polymere weisen jedoch mehrere Nachteile auf. Zwar besitzen diese ein Redoxpotential, welches über dem der häufig verwendeten Nitroxidradikale liegt und ermöglichen somit höhere Zellspannungen bei Verwendung der dialkoxybenzolhaltigen Polymere als Kathodenmaterial, Allerdings zeigen Batterien, welche mit diese literaturbeschriebenen Polymeren hergestellt wurden nur geringe Entladekapazitäten. Somit ist es wünschenswert und deshalb Aufgabe der Erfindung, Polymere zur Verfügung zu stellen, mit welchen eine noch höhere Zellspannung, höhere Kapazität und somit höhere spezifische Energie erreicht werden kann. Daneben ist der Syntheseaufwand ein weiteres Kriterium für die Einsetzbarkeit organischer Materialien als aktive Elektrodenmaterialien. Es war deshalb die weitere Aufgabe der vorliegenden Erfindung, möglichst einfach synthetisierbare Polymere zur Verfügung zu stellen.

### Detaillierte Beschreibung der Erfindung

Es wurden nun überraschend Polymere gefunden, welche die vorstellig genannten Aufgaben lösen. Die vorliegende Erfindung betrifft demnach
1. ein Polymer umfassend n¹ miteinander verknüpfte Wiederholungseinheiten der chemischen Struktur **(I)** oder n² miteinander verknüpfte Wiederholungseinheiten der chemischen Struktur **(II)** mit 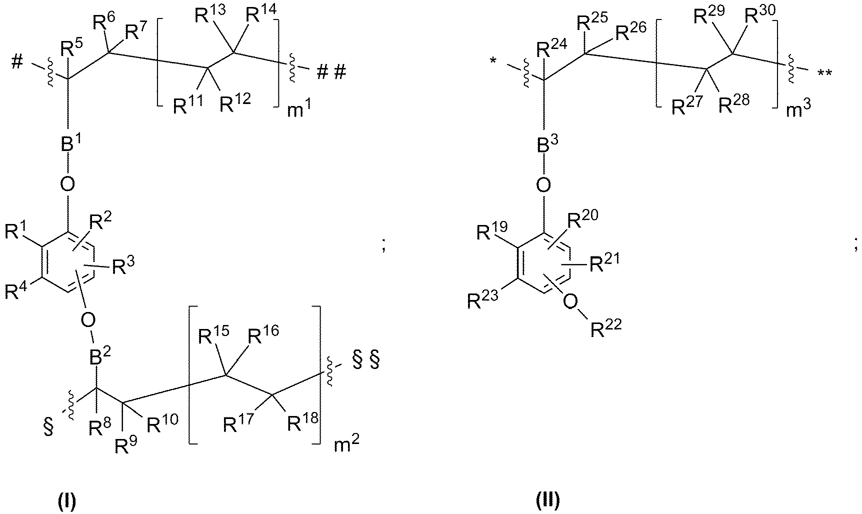 wobei n¹ und n² unabhängig voneinander jeweils eine ganze Zahl ≥ 4 und ≤ 5000, insbesondere ≥ 10 und ≤ 1000, sind,
   wobei m¹, m², m³ unabhängig voneinander jeweils eine ganze Zahl ≥ 0 und ≤ 5000, insbesondere ≥ 0 und ≤ 1000, sind,
   wobei die Wiederholungseinheiten der chemischen Struktur **(I)** innerhalb des Polymers gleich oder zumindest teilweise voneinander verschieden sind,
   wobei die Wiederholungseinheiten der chemischen Struktur **(II)** innerhalb des Polymers gleich oder zumindest teilweise voneinander verschieden sind,
   wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
   wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
   wobei die Reste R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²³, R²⁴, R²⁵, R²⁶, R²⁷, R²⁸, R²⁹, R³⁰ unabhängig voneinander jeweils aus der Gruppe bestehend aus
   Wasserstoff, Alkylgruppe mit 1 bis 30 Kohlenstoffatomen,
   insbesondere aus der Gruppe bestehend aus Wasserstoff, Alkylgruppe mit 1 bis 8 Kohlenstoffatomen,
   ausgewählt sind,
   und wobei R²² eine Alkylgruppe mit 1 bis 30, insbesondere mit 1 bis 8, Kohlenstoffatomen ist, und wobei die Reste R¹¹, R¹³, R¹⁵, R¹⁷ unabhängig voneinander jeweils auch eine Gruppe der allgemeinen Struktur **(III)** mit 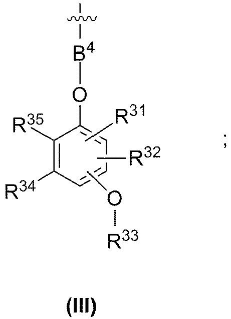 wobei die Reste R³¹, R³², R³⁴, R³⁵ unabhängig voneinander jeweils aus der Gruppe bestehend aus
   Wasserstoff, Alkylgruppe mit 1 bis 30 Kohlenstoffatomen,
   insbesondere aus der Gruppe bestehend aus Wasserstoff, Alkylgruppe mit 1 bis 8 Kohlenstoffatomen,
   ausgewählt sind,
   und wobei R³³ eine Alkylgruppe mit 1 bis 30, insbesondere mit 1 bis 8, Kohlenstoffatomen ist, sein können,
   und wobei R⁵, R⁶, R⁷, R⁸, R⁹, R¹⁰, R¹¹, R¹², R¹³, R¹⁴, R¹⁵, R¹⁶, R¹⁷, R¹⁸, R²⁴, R²⁵, R²⁶, R²⁷, R²⁸, R²⁹, R³⁰ jeweils auch aus der Gruppe bestehend aus
   Nitrogruppe, -CN, -F, -CI, -Br, -I, -O-R⁴⁰, wobei R⁴⁰ eine Alkylgruppe mit 1 bis 30, bevorzugt 1 bis 8 Kohlenstoffatomen ist,
   ausgewählt sein können,
   und wobei B¹, B², B³, B⁴ unabhängig voneinander jeweils aus der Gruppe bestehend aus direkte Bindung,
   &-(CH₂)ₚ₁-&&, wobei p1 eine ganze Zahl von 1 bis 4 ist, und wobei mindestens eine -CH₂- Gruppe auch durch -C(=O)- ersetzt sein kann,
   &-(CH₂)ᵣ₁- B⁵-(CH₂)ᵣ₂-&&, wobei B⁵ ein (hetero)aromatischer zweiwertiger 6-Ring, 3-Ring oder 5-Ring ist und r1, r2 jeweils 0 oder 1, wobei r1 + r2 ≤ 1 ist, ist (wobei bevorzugt r1 = 0 und r2 = 1 und B⁵ = Phenylen, bevorzugter 1,4-Phenylen),
   &-(CH₂)_{q1}-B⁶-(CH₂)_{q2}-&& mit B⁶ = O, S, NH; q1 = 0, 1, 2 und q2 = 1, 2, 3 wobei q1 + q2 ≤ 3 und wobei eine -CH₂- Gruppe auch durch -C(=O)- ersetzt sein kann,
   &-O-C(=O)-NH-CH₂ -&&; ausgewählt sind,
   und wobei "&&" für B¹ die zu A⁵ = Sauerstoff weisende Bindung bezeichnet, für B² die zu A⁶ = Sauerstoff weisende Bindung bezeichnet, für B³ die zu A⁷ = Sauerstoff weisende Bindung bezeichnet, für B⁴ die zu A¹³ = Sauerstoff weisende Bindung bezeichnet,
   und wobei "&" für B¹ die zu R⁵ weisende Bindung bezeichnet, für B² die zu R⁸ weisende Bindung bezeichnet, für B³ die zu R²⁴ weisende Bindung bezeichnet, für B⁴ die zu R¹² bzw. R¹⁴ bzw. R¹⁶ bzw. R¹⁸ weisende Bindung bezeichnet.
   Das erfindungsgemäße Polymer in der bevorzugten Ausführungsform nach Punkt 1. kann dabei insbesondere n¹ miteinander verknüpfte Wiederholungseinheiten der chemischen Struktur **(I)** mit den für die bevorzugte Ausführungsform angegebenen Bedeutungen von R¹ bis R¹⁸, B¹, B², m¹, m² umfassen.
   Das erfindungsgemäße Polymer in der bevorzugten Ausführungsform nach Punkt 1. kann dabei alternativ insbesondere n² miteinander verknüpfte Wiederholungseinheiten der chemischen Struktur **(II)** mit den für die bevorzugte Ausführungsform angegebenen Bedeutungen von R¹⁹ bis R³⁰, B³, m³ umfassen.
2. In einer bevorzugteren Ausführungsform betrifft die vorliegende Erfindung ein Polymer umfassend n¹ miteinander verknüpfte Wiederholungseinheiten der chemischen Struktur **(I)** oder n² miteinander verknüpfte Wiederholungseinheiten der chemischen Struktur **(II)** mit 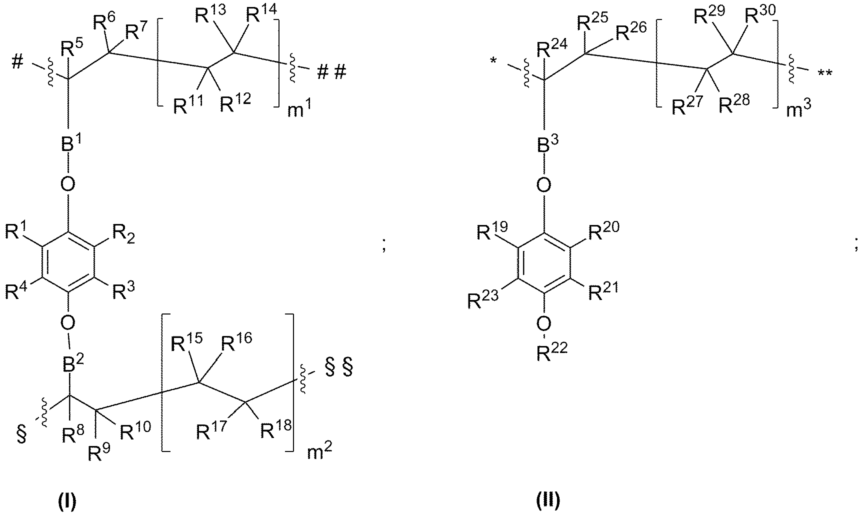 wobei n¹ und n² unabhängig voneinander jeweils eine ganze Zahl ≥ 10 und ≤ 1000, sind,
   wobei m¹, m², m³ unabhängig voneinander jeweils eine ganze Zahl ≥ 0 und ≤ 1000, sind,
   wobei die Wiederholungseinheiten der chemischen Struktur **(I)** innerhalb des Polymers gleich oder zumindest teilweise voneinander verschieden sind,
   wobei die Wiederholungseinheiten der chemischen Struktur **(II)** innerhalb des Polymers gleich oder zumindest teilweise voneinander verschieden sind,
   wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
   wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
   wobei die Reste R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²³, R²⁴, R²⁵, R²⁶, R²⁷, R²⁸, R²⁹, R³⁰ unabhängig voneinander jeweils aus der Gruppe bestehend aus Wasserstoff, Alkylgruppe mit 1 bis 8 Kohlenstoffatomen ausgewählt sind,
   und wobei R²² eine Alkylgruppe mit 1 bis 8 Kohlenstoffatomen ist,
   und wobei die Reste R¹¹, R¹³, R¹⁵, R¹⁷ unabhängig voneinander jeweils auch eine Gruppe der allgemeinen Struktur **(III)** mit 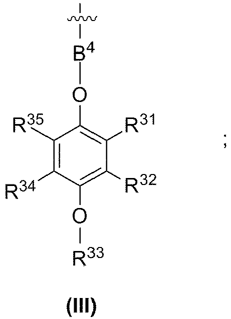 wobei die Reste R³¹, R³², R³⁴, R³⁵ unabhängig voneinander jeweils aus der Gruppe bestehend aus Wasserstoff, Alkylgruppe mit 1 bis 8 Kohlenstoffatomen ausgewählt sind,
   und wobei R³³ eine Alkylgruppe mit 1 bis 8 Kohlenstoffatomen ist,
   sein können,
   und wobei R⁵, R⁶, R⁷, R⁸, R⁹, R¹⁰, R¹¹, R¹², R¹³, R¹⁴, R¹⁵, R¹⁶, R¹⁷, R¹⁸, R²⁴, R²⁵, R²⁶, R²⁷, R²⁸, R²⁹, R³⁰ jeweils auch aus der Gruppe bestehend aus

Nitrogruppe, -CN, -F, -CI, -Br, -I, -O-R⁴⁶, wobei R⁴⁰ eine Alkylgruppe mit 1 bis 8 Kohlenstoffatomen ist,
ausgewählt sein können,
und wobei B¹, B², B³, B⁴ unabhängig voneinander jeweils aus der Gruppe bestehend aus direkte Bindung,
&-(CH₂)ₚ₁-&&, wobei p1 eine ganze Zahl von 1 bis 3 ist,
&-B⁵-CH₂-&&, wobei B⁵ = Phenylen, bevorzugter 1,4-Phenylen ist
&-(CH₂)_{q1}-B⁶-(CH₂)_{q2}-&& mit B⁶ = O, S; q1 = 0, 1, 2 und q2 = 1, 2, 3 wobei q1 + q2 ≤ 3, bevorzugt q1+q2≤2,
&-O-C(=O)-NH-CH₂ -&& ausgewählt sind,
und wobei "&&" für B¹ die zu A⁵ = Sauerstoff weisende Bindung bezeichnet, für B² die zu A⁶ = Sauerstoff weisende Bindung bezeichnet, für B³ die zu A⁷ = Sauerstoff weisende Bindung bezeichnet, für B⁴ die zu A¹³ = Sauerstoff weisende Bindung bezeichnet,
und wobei "&" für B¹ die zu R⁵ weisende Bindung bezeichnet, für B² die zu R⁸ weisende Bindung bezeichnet, für B³ die zu R²⁴ weisende Bindung bezeichnet, für B⁴ die zu R¹² bzw. R¹⁴ bzw. R¹⁶ bzw. R¹⁸ weisende Bindung bezeichnet.

Das erfindungsgemäße Polymer in der bevorzugteren Ausführungsform nach Punkt 2. kann dabei insbesondere n¹ miteinander verknüpfte Wiederholungseinheiten der chemischen Struktur **(I)** mit den für die bevorzugtere Ausführungsform angegebenen Bedeutungen von R¹ bis R¹⁸, B¹, B², m¹, m² umfassen.

Das erfindungsgemäße Polymer in der bevorzugteren Ausführungsform nach Punkt 2. kann dabei alternativ insbesondere n² miteinander verknüpfte Wiederholungseinheiten der chemischen Struktur **(II)** mit den für die bevorzugtere Ausführungsform angegebenen Bedeutungen von R¹⁹ bis R³⁰, B³, m³ umfassen.

Noch bevorzugter sind im erfindungsgemäßen Polymer R¹ = R³, R² = R⁴, R¹⁹ = R²¹, R²⁰ = R²³, R³¹ = R³⁴, R³² = R³⁵, wobei insbesondere R⁵ bis R¹⁸ und R²⁴ bis R³⁰ jeweils Wasserstoff sind.

Noch mehr bevorzugter sind R¹ = R³ = H, R² = R⁴ = Alkylgruppe mit 1 bis 8, insbesondere 1 bis 6, Kohlenstoffatomen, R¹⁹ = R²¹ = H, R²⁰ = R²³= Alkylgruppe mit 1 bis 8, insbesondere 1 bis 6, Kohlenstoffatomen, R³¹ = R³⁴ = H, R³² = R³⁵ = Alkylgruppe mit 1 bis 8, insbesondere 1 bis 6, Kohlenstoffatomen und B¹, B², B³, B⁴ unabhängig voneinander jeweils aus der Gruppe bestehend aus direkte Bindung, Methylen, Ethylen, n-Propylen, &- B⁵-CH₂-&&, wobei B⁵ = 1,4-Phenylen, noch bevorzugter aus der Gruppe bestehend aus direkte Bindung Methylen, Ethylen, n-Propylen, bevorzugt B¹, B², B³, B⁴ jeweils direkte Bindung oder Methylen, noch bevorzugter B¹, B², B³, B⁴ jeweils Methylen ist, ausgewählt ist, und wobei insbesondere R⁵ bis R¹⁸ und R²⁴ bis R³⁰ jeweils Wasserstoff sind, wobei "&&" und "&" die oben angegebenen Bedeutungen haben.

Die erfindungsgemäßen Polymere sind leicht herstellbar und zeichnen sich dadurch aus, dass sie in Sekundärbatterien mit höherer Zellspannung und höheren Kapazität der entsprechenden Batterie führt, dies auch nach Durchlaufen mehrerer Lade/-Entladezyklen. Diese beschriebenen Polymere besitzen eine kompaktere Struktur als die von Nesvadba *et al.* und Weng *et al.* beschriebenen, da der "Spacer", welcher durch B¹ und A⁵ bzw. B² und A⁶ bzw. B³ und A⁷ bzw. B⁴ und A¹³ gebildet wird, kürzer als jener in den von Nesvadba *et al.* und Weng *et al.* beschriebenen Polymeren ist.

Das erfindungsgemäße Polymer umfasst n¹ miteinander verknüpfte Wiederholungseinheiten der chemischen Struktur **(I)** oder n² miteinander verknüpfte Wiederholungseinheiten der chemischen Struktur **(II).**

Dabei sind n¹ und n² unabhängig voneinander jeweils eine ganze Zahl ≥ 4 und ≤ 5000, bevorzugt eine ganze Zahl ≥ 10 und ≤ 1000.
m¹, m², m³ sind unabhängig voneinander eine ganze Zahl ≥ 0 und ≤ 5000, bevorzugt ≥ 0 und ≤ 1000.

Dabei beträgt die durchschnittliche Molmasse (bestimmt mittels Größenausschlusschromatographie mit Polystyrolstandard; DIN 55672-2:2015-02) insbesondere 700 bis 2000000 g/mol, bevorzugt 1000 bis 1000000 g/mol, bevorzugter 3000 bis 300000 g/mol.

Die Wiederholungseinheiten der chemischen Struktur **(I)** sind innerhalb des Polymers gleich oder zumindest teilweise voneinander verschieden. Die Wiederholungseinheiten der chemischen Struktur **(II)** sind innerhalb des Polymers gleich oder zumindest teilweise voneinander verschieden. "Zumindest teilweise voneinander verschieden" bedeutet, dass sich mindestens zwei Wiederholungseinheiten voneinander unterscheiden.

Das heißt insbesondere im Falle der chemischen Struktur **(I)**, dass sich mindestens zwei der n¹ miteinander verknüpften Wiederholungseinheiten in mindestens einem der Reste A¹ bis A⁶, R¹ bis R¹⁸, B¹, B² und/oder in dem Wert von m¹, m² und/oder der Position von A², A³, A⁶ am zentralen Phenylring unterscheiden.

Das heißt insbesondere im Falle der chemischen Struktur **(II)**, dass sich mindestens zwei der n² miteinander verknüpften Wiederholungseinheiten in mindestens einem der Reste Abis A¹², R¹⁹ bis R³⁰, B³ und/oder in dem Wert von m³ unterscheiden.

Dabei sind die Wiederholungseinheiten der chemischen Struktur **(I)** innerhalb des Polymers so miteinander verknüpft, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist.

Dabei sind die Wiederholungseinheiten der chemischen Struktur **(II)** innerhalb des Polymers so miteinander verknüpft, dass die durch "*" gekennzeichnete Bindung einer bestimmten Wiederholungseinheit mit der durch "**" gekennzeichneten Bindung der benachbarten Wiederholungseinheit verknüpft ist.

Die Endgruppen der ersten Wiederholungseinheit des erfindungsgemäßen Polymers, welche sich für diese in der chemischen Struktur **(I)** an den durch "#" und "§" definierten Bindungen befindet, sowie die Endgruppen der n¹-ten Wiederholungseinheit des erfindungsgemäßen Polymers, welche sich für diese in der chemischen Struktur **(I)** an den durch "#" und "# #" definierten Bindungen befindet, sind nicht besonders beschränkt und ergeben sich aus der bei der Herstellungsmethode des erfindungsgemäßen Polymers verwendeten Polymerisationsmethode. So kann es sich dabei um Abbruchfragmente eines Initiators oder einer Wiederholungseinheit handeln. Bevorzugt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher bevorzugt Phenylrest, Benzylrest oder α-Hydroxybenzyl ist.

Die Endgruppen der ersten Wiederholungseinheit des erfindungsgemäßen Polymers, welche sich für diese in der chemischen Struktur **(II)** an der durch "*" definierten Bindung befindet, sowie die Endgruppen der n²-ten Wiederholungseinheit des erfindungsgemäßen Polymers, welche sich für diese in der chemischen Struktur **(II)** an der durch "**" definierten Bindung befindet, sind nicht besonders beschränkt und ergeben sich aus der bei der Herstellungsmethode des erfindungsgemäßen Polymers verwendeten Polymerisationsmethode. So kann es sich dabei um Abbruchfragmente eines Initiators oder einer Wiederholungseinheit handeln. Bevorzugt sind diese Endgruppen ausgewählt aus Wasserstoff, Halogen, Hydroxy, unsubstituierter oder mit -CN, -OH, Halogen substituierter aliphatischer Rest (der insbesondere eine unsubstituierte oder entsprechend substituierte Alkylgruppe sein kann), (hetero)aromatischer Rest, welcher bevorzugt Phenylrest, Benzylrest oder α-Hydroxybenzyl ist.

Im Falle von B¹ bezeichnet "&&" die zu A⁵ weisende Bindung. Dies ist die chemische Bindung, die B¹ mit A⁵ verknüpft. Im Falle von B¹ bezeichnet "&" die zu R⁵ weisende Bindung. Dies ist die andere in der chemischen Struktur **(I)** von B¹ wegführende chemische Bindung, also die chemische Bindung, die B¹ mit dem Kohlenstoffatom, an welchem R⁵ hängt, verknüpft.

Im Falle von B² bezeichnet "&&" die zu A⁶ weisende Bindung. Dies ist die chemische Bindung, die B² mit A⁶ verknüpft. Im Falle von B² bezeichnet "&" die zu R⁸ weisende Bindung. Dies ist die andere in der chemischen Struktur **(I)** von B² wegführende chemische Bindung, also die chemische Bindung, die B² mit dem Kohlenstoffatom, an welchem R⁸ hängt, verknüpft.

Im Falle von B³ bezeichnet "&&" die zu A⁷ weisende Bindung. Dies ist die chemische Bindung, die B³ mit A⁷ verknüpft. Im Falle von B³ bezeichnet "&" die zu R²⁴ weisende Bindung. Dies ist die andere in der chemischen Struktur **(II)** von B³ wegführende chemische Bindung, also die chemische Bindung, die B³ mit dem Kohlenstoffatom, an welchem R²⁴ hängt, verknüpft.

Im Falle von B⁴ bezeichnet "&&" die zu A¹³ weisende Bindung. Dies ist die chemische Bindung, die B⁴ mit A¹³ verknüpft. Im Falle von B⁴ bezeichnet "&" die zu R¹² bzw. R¹⁴ bzw. R¹⁶ bzw. R¹⁸ weisende Bindung. Dies ist die andere in der chemischen Struktur **(III)** von B⁴ wegführende chemische Bindung, also die chemische Bindung, die, wenn die chemische Struktur **(III)** R¹¹ ist, B⁴ mit dem Kohlenstoffatom, an welchem R¹² hängt, verknüpft bzw. die, wenn die chemische Struktur **(III)** R¹³ ist, B⁴ mit dem Kohlenstoffatom, an welchem R¹⁴ hängt, verknüpft bzw. die, wenn die chemische Struktur **(III)** R¹⁵ ist, B⁴ mit dem Kohlenstoffatom, an welchem R¹⁶ hängt, verknüpft bzw. die, wenn die chemische Struktur **(III)** R¹⁷ ist, B⁴ mit dem Kohlenstoffatom, an welchem R¹⁸ hängt, verknüpft.

"Gegebenenfalls mit mindestens einer Gruppe ausgewählt aus Nitrogruppe, -NH₂, CN, SH, OH, Halogen substituierter und gegebenenfalls mindestens eine Gruppe ausgewählt aus Ether, Thioether, Aminoether, Carbonylgruppe, Carbonsäureestergruppe, Carbonsäureamidgruppe, Sulfonsäureestergruppe, Phosphorsäureester aufweisender aliphatischer Rest" bedeutet, dass mindestens ein an Kohlenstoffatom gebundenes Wasserstoffatom im aliphatischen Rest durch eine Gruppe ausgewählt aus Nitrogruppe, -NH₂, -CN, -SH, -OH, Halogen ersetzt sein kann (aber nicht muss) und/oder dass in dem aliphatischen Rest mindestens eine mit zwei sp³-hybridisierten Kohlenstoffatomen, bevorzugt mit zwei -CH₂-Gruppen, noch bevorzugter mit zwei -CH₂CH₂-Gruppen, verknüpfte CH₂-Gruppe durch ein Sauerstoffatom (dann liegt eine Ethergruppe vor), ein Schwefelatom (dann liegt eine Thioethergruppe vor), eine NH oder N-Alkylgruppe (dann liegt eine Aminoethergruppe vor), eine -C(=O)-Gruppe (dann liegt eine Carbonylgruppe vor), eine -C(=O)-O-Gruppe (dann liegt eine Carbonsäureestergruppe vor), eine -C(=O)-NH- oder -C(=O)-N(Alkyl)-Gruppe (dann liegt eine Carbonsäureamidgruppe vor), eine -SO₂-O-Gruppe (dann liegt ein Sulfonnsäureester vor), eine -OPO₂-O-Gruppe (dann liegt ein Phosphorsäureester vor) substituiert sein kann (aber nicht muss).

Ein aliphatischer Rest ist im Sinne der Erfindung eine acyclische oder cyclische, gesättigte oder ungesättigte, unverzweigte oder verzweigte Kohlenwasserstoffgruppe, die nicht aromatisch ist. Insbesondere ist darunter im Sinne der Erfindung eine Kohlenwasserstoffgruppe ausgewählt aus Alkylgruppe, Alkenylgruppe, Alkinylgruppe, oder gesättigter oder ungesättigter Cycloalkylgruppe zu verstehen.

Im Sinne der Erfindung ist eine "Alkylgruppe" unverzweigt oder verzweigt und ein einwertiger gesättigter Kohlenwasserstoffrest, der die allgemeine chemische Struktur **(a)** mit 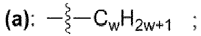 aufweist.

Die Kette an Kohlenstoffatomen "-C_{w}H_{2w+1}" kann dabei linear sein, dann handelt es sich um eine unverzweigte Alkylgruppe. Sie kann aber auch Verzweigungen aufweisen, dann handelt es sich um eine verzweigte Alkylgruppe.

Dabei ist w in der chemischen Struktur **(a)** eine ganze Zahl, insbesondere aus dem Bereich 1 bis 30, bevorzugt aus dem Bereich 1 bis 18, bevorzugter aus dem Bereich 1 bis 12, noch bevorzugter aus dem Bereich 1 bis 10, noch mehr bevorzugter aus dem Bereich 1 bis 8, am bevorzugtesten aus dem Bereich 1 bis 6. w ist bei einer unverzweigten oder verzweigten Alkylgruppe mit 1 bis 30 Kohlenstoffatomen ausgewählt aus dem Bereich 1 bis 30. w ist bei einer unverzweigten oder verzweigten Alkylgruppe mit 1 bis 18 Kohlenstoffatomen ausgewählt aus dem Bereich 1 bis 18. w ist bei einer unverzweigten oder verzweigten Alkylgruppe mit 1 bis 12 Kohlenstoffatomen ausgewählt aus dem Bereich 1 bis 12. w ist bei einer unverzweigten oder verzweigten Alkylgruppe mit 1 bis 10 Kohlenstoffatomen ausgewählt aus dem Bereich 1 bis 10. w ist bei einer unverzweigten oder verzweigten Alkylgruppe mit 1 bis 8 Kohlenstoffatomen ausgewählt aus dem Bereich 1 bis 8. w ist bei einer unverzweigten oder verzweigten Alkylgruppe mit 1 bis 6 Kohlenstoffatomen ausgewählt aus dem Bereich 1 bis 6.

Im Sinne der Erfindung ist eine "unverzweigte oder verzweigte Alkylgruppe mit 1 bis 30 Kohlenstoffatomen" insbesondere ausgewählt aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl, *n*-Tridecyl, *n*-Tetradecyl, *n*-Pentadecyl, *n*-Hexadecyl, *n*-Heptadecyl, *n*-Octadecyl, *n*-Nonadecyl, *n*-Eicosyl, *n*-Heneicosyl, *n*-Docosyl, *n*-Tricosyl, *n*-Tetracosyl, *n*-Pentacosyl, *n*-Hexacosyl, *n*-Heptacosyl, *n*-Octocosyl, *n*-Nonacosyl, *n*-Tricontyl.

Im Sinne der Erfindung ist eine "unverzweigte oder verzweigte Alkylgruppe mit 1 bis 18 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl, *n*-Tridecyl, *n*-Tetradecyl, *n*-Pentadecyl, *n*-Hexadecyl, *n*-Heptadecyl, *n*-Octadecyl.

Im Sinne der Erfindung ist eine "unverzweigte oder verzweigte Alkylgruppe mit 1 bis 12 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl, *n*-Undecyl, *n*-Dodecyl.

Im Sinne der Erfindung ist eine "unverzweigte oder verzweigte Alkylgruppe mit 1 bis 10 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl, *n*-Nonyl, *n*-Decyl.

Im Sinne der Erfindung ist eine "unverzweigte oder verzweigte Alkylgruppe mit 1 bis 8 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl, *n*-Heptyl, *n*-Octyl.

Im Sinne der Erfindung ist eine "unverzweigte oder verzweigte Alkylgruppe mit 1 bis 6 Kohlenstoffatomen" insbesondere ausgewählt aus der Gruppe bestehend aus Methyl, Ethyl, *n*-Propyl, *iso*-Propyl, *n*-Butyl, *sec*-Butyl, *iso*-Butyl, *tert*-Butyl, *n*-Pentyl, 1-Methylbutyl, 2-Methylbutyl, 3-Methylbutyl, 1,1-Dimethylpropyl, 1,2-Dimethylpropyl, 2,2-Dimethylpropyl, 1-Ethylpropyl, *n*-Hexyl, 1-Methylpentyl, 2-Methylpentyl, 3-Methylpentyl, 4-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 1-Ethylbutyl, 2-Ethylbutyl, 1,1,2-Trimethylpropyl, 1,2,2-Trimethylpropyl, 1-Ethyl-1-methylpropyl, 1-Ethyl-2-methylpropyl.

Eine Alkylgruppe mit 1 bis 30 Kohlenstoffatomen ist erfindungsgemäß insbesondere eine Alkylgruppe mit 1 bis 18, bevorzugt 1 bis 12, bevorzugter 1 bis 10, noch bevorzugter 1 bis 8, am bevorzugtesten 1 bis 6 Kohlenstoffatomen.

Eine Alkylgruppe mit 1 bis 6 Kohlenstoffatomen ist erfindungsgemäß insbesondere eine Alkylgruppe mit 1 bis 4 Kohlenstoffatomen und noch bevorzugter ausgewählt aus Methyl, Ethyl, *n-*Propyl, *iso*-Propyl, *n*-Butyl, *sec*-Butyl, *tert*-Butyl.

Im Sinne der Erfindung ist eine "Alkenylgruppe" unverzweigt oder verzweigt und ergibt sich aus einer Alkylgruppe durch Substitution mindestens einer CH-CH-Einfachbindung in der Alkylgruppe durch eine C=C-Doppelbindung.

Im Sinne der Erfindung ist eine "Alkinylgruppe" unverzweigt oder verzweigt und ergibt sich aus einer Alkylgruppe durch Substitution mindestens einer CH₂-CH₂-Einfachbindung in der Alkylgruppe durch eine C=C-Dreifachbindung oder aus einer Alkenylgruppe durch Substitution mindestens einer CH₂-CH₂-Einfachbindung und/oder einer CH=CH-Doppelbindung in der Alkenylgruppe durch jeweils eine C=C-Dreifachbindung.

Eine gesättigte Cycloalkylgruppe ist ein Alkylrest, in dem mindestens 3 Kohlenstoffatome innerhalb eines gesättigten Ringes vorliegen, und kann daneben auch noch weitere nicht im Ring vorliegende Kohlenstoffatome umfassen. Sie kann über eines dieser Ring-Kohlenstoffatome oder über Kohlenstoffatome, die nicht innerhalb des Ringes vorliegen, mit dem restlichen Molekül verknüpft sein. Im Sinne der Erfindung ist eine Cycloalkylgruppe insbesondere ausgewählt aus Cyclopropyl, Cyclobutyl, Cyclopropylmethyl, Cyclopentyl, Cyclobutylmethyl, Cyclohexyl, Cycloheptyl, Cyclooctyl, Cyclononyl, Cyclodecyl, Cycloundecyl, Cyclododecyl, Cyclotridecyl, Cyclotetradecyl, Cyclopentadecyl.

Eine ungesättigte Cycloalkylgruppe (= Cycloalkenyl oder Cycloalkinyl) ergibt sich aus einer gesättigten Cycloalkylgruppe durch Substitution mindestens einer CH-CH-Einfachbindung in der gesättigten Cycloalkylgruppe durch mindestens eine C=C-Doppelbindung (Cycloalkenyl) und/oder einer CH₂-CH₂-Einfachbindung durch eine C=C-Dreifachbindung (Cycloalkinyl).

Ein (hetero)aromatischer Rest ist im Sinne der Erfindung ein heteroaromatischer oder ein aromatischer Rest.

Ein aromatischer Rest weist ausschließlich Kohlenstoffatome und mindestens einen aromatischen Ring auf. Ein aromatischer Rest ist insbesondere ausgewählt Arylrest, Aralkylrest, Alkarylrest. Arylreste weisen ausschließlich aromatische Ringe auf und sind über ein Kohlenstoffatom des aromatischen Ringes mit dem Molekül verknüpft. Bevorzugt ist ein Arylrest Phenyl.

Alkarylreste weisen mindestens einen aromatischen Ring auf, über welchen sie mit dem restlichen Molekül verknüpft sind und tragen daneben auch Alkylreste am aromatischen Ring. Bevorzugt ist ein Alkarylrest Tolyl.

Aralkylreste ergeben sich formal durch Substitution eines Wasserstoffatoms einer Alkylgruppe durch einen aromatischen Kohlenwasserstoffring, bevorzugt Phenyl. Bevorzugt ist ein Aralkylrest Benzyl, Phenylethyl, α-Methylbenzyl.

Ein heteroaromatischer Rest ist insbesondere ausgewählt Hetero-Arylrest, Hetero-Aralkylrest, Alkylheteroarylrest. Es ist ein aromatischer Rest, der zusätzlich mindestens ein Heteroatom, insbesondere ein Heteroatom ausgewählt aus der Gruppe bestehend aus Stickstoff, Sauerstoff, Schwefel innerhalb des aromatischen Ringes, oder, im Falle eines Hetero-Aralkylrests oder eines Alkylheteroarylrestes, alternativ oder zusätzlich außerhalb des aromatischen Ringes aufweist.

Bevorzugte (hetero)aromatische Reste sind ausgewählt aus der Gruppe bestehend aus einem Ring der vorstehend definierten chemischen Struktur **(III)**, Azol, Imidazol, Pyrrol, Pyrazol, Triazol, Tetrazol, Thiophen, Furan, Thiazol, Thiadiazol, Oxazol, Oxadiazole, Pyridin, Pyrimidin, Triazin, Tetrazin, Thiazine, Benzofuran, Purin, Indol, 9-Anthryl, 9-Phenanthryl.

Die erfindungsgemäßen Polymere können auf einfache und aufwandgeringe Weise sowie aus gut zugänglichen Startmaterialien hergestellt werden. Abhängig von der verwendeten Polymerisationsart können die Monomere teilweise aus kommerziell zu einem sehr geringen Preis erhältlichen Ausgangsstoffen in nur einer Synthesestufe ohne chromatographische Trennverfahren hergestellt werden, was einen deutliche Fortschritt gegenüber den in der Fachliteratur bekannten Herstellungsmethoden bietet. Zur Polymerisation ist kein weiteres Monomer nötig und die Polymerisation benötigt keine teuren Metallkatalysatoren, sondern als Herstellungsmethode können einfache Polymerisationsverfahren verwendet werden. Dabei können Polymere mit hoher Molmasse in sehr hohen Ausbeuten erhalten werden. Durch die Einführung von polymerisierbaren Gruppen mit geringer Molmasse kann die Monomermolmasse niedrig gehalten und die theoretische Kapazität (die umgekehrt proportional zur Molmasse ist) des sekundären elektrischen Ladungsspeichers maximiert werden. Ferner stehen in diesen Polymeren die redoxaktiven Gruppen nicht in Konjugation miteinander; als Konsequenz weist der elektrische Ladungsspeicher ein flaches Lade-/Entladeplateau auf. Diese Materialien unterscheiden sich vom Stand der Technik durch eine sehr einfache Synthese aus kommerziell zu einem sehr geringen Preis erhältlichen Ausgangsstoffen in teilweise nur einer Synthesestufe ohne chromatographische Trennverfahren. Weiterhin ermöglicht das hohe Redoxpotential der Polymere gemäß der Erfindung höhere Zellspannungen und Energiedichten als in den bekannten Systemen und erlaubt höhere Entladespannungen.

Die Polymere gemäß dieser Erfindung können sowohl Homopolymere als auch Copolymere sein. Homopolymere sind Polymere, die nur aus einem Monomer synthetisiert wurden. Copolymere sind Polymere, die aus zwei oder mehreren Monomeren synthetisiert wurden. Werden zwei oder mehrere Monomere bei der Synthese verwendet, so können die Monomere der Wiederholeinheiten der Polymere gemäß dieser Erfindung sowohl in statistischer Verteilung, als Blöcke oder alternierend im Polymer vorliegen. Die Polymere gemäß dieser Erfindung können sowohl in linearer Form [wie in Struktur **(II)]** als auch als quervernetzt [wie in Struktur **(I)]** vorliegen.

Die erfindungsgemäßen Polymere können durch dem Fachmann bekannte anionische, kationische oder radikalische Polymerisation einer Verbindung der folgenden Struktur **(I)'** oder **(II)'**, optional auch mit einer Struktur **(III)'** synthetisiert werden. In den Strukturen **(I)'** oder **(II)'** haben die Reste R^{1'} bis R^{10'} und R^{19'} bis R^{30'}, B^{1'} bis B^{3'} und A^{1'} bis A^{12'} jeweils die vorstehend für R¹ bis R¹⁰ und R¹⁹ bis R³⁰, B¹ bis B³ und A¹ bis A¹² angegebenen Bedeutungen.

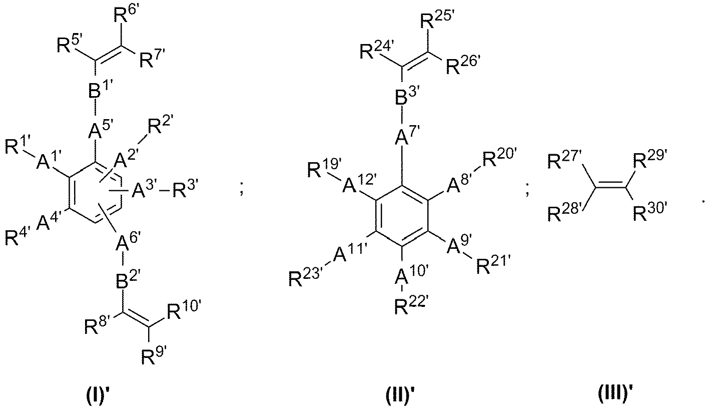

Ein Polymer der Struktur **(I)** kann dabei durch eine anionische, kationische oder radikalische Polymerisation, in der ausschließlich Monomere der Struktur **(I)'** eingesetzt werden, erhalten werden, so dass das erhaltene Polymer der Struktur **(I)** ein Homopolymer darstellt, in welchem m¹ = m² = 0.

Ein Polymer der Struktur **(I)** kann dabei durch eine anionische, kationische oder radikalische Polymerisation, in der Monomere der Struktur **(I)'** und **(II)'** eingesetzt werden, erhalten werden, so dass das erhaltene Polymer der Struktur **(I)** ein Copolymer darstellt, in welchem m¹, m² ≥ 0 und die Reste R¹¹, R¹³, R¹⁵ oder R¹⁷ in der obigen Struktur **(I)** unabhängig voneinander jeweils eine Gruppe der vorgenannten allgemeinen Struktur **(III)** sind.

Ein Polymer der Struktur **(I)** kann dabei durch eine anionische, kationische oder radikalische Polymerisation, in der Monomere der Struktur **(I)'** und **(III)'** eingesetzt werden, erhalten werden, so dass das erhaltene Polymer der Struktur **(I)** ein Copolymer darstellt, in welchem m¹, m² ≥ 0 und die Reste R¹¹, R¹³, R¹⁵, R¹⁷ in der obigen Struktur **(I)** keine Gruppe der allgemeinen Struktur **(III)** sein können.

Ein Polymer der Struktur **(I)** kann dabei durch eine anionische, kationische oder radikalische Polymerisation, in der Monomere der Struktur **(I)'**, **(II)'** und **(III)'** eingesetzt werden, erhalten werden, so dass das erhaltene Polymer der Struktur **(I)** ein Copolymer darstellt, in welchem m¹, m² ≥ 0 und die Reste R¹¹, R¹³, R¹⁵, R¹⁷ in der obigen Struktur **(I)** unabhängig voneinander jeweils auch eine Gruppe der vorgenannten allgemeinen Struktur **(III)** sein können.

Ein Polymer der Struktur **(II)** kann dabei durch eine anionische, kationische oder radikalische Polymerisation, in der ausschließlich Monomere der Struktur **(II)'** eingesetzt werden, erhalten werden, so dass das erhaltene Polymer der Struktur **(II)** ein Homopolymer darstellt, in welchem m³= 0.

Ein Polymer der Struktur **(II)** kann dabei durch eine anionische, kationische oder radikalische Polymerisation, in der Monomere der Struktur **(II)'** und **(III)'** eingesetzt werden, erhalten werden, so dass das erhaltene Polymer der Struktur **(II)** ein Copolymer darstellt, in welchem m³ ≥ 0.

Die Verbindungen der Strukturen **(I)'** und **(II)'** sind dem Fachmann über bekannte Verfahren zugänglich, z.B. über Umsetzung eines Dihydroxybenzols oder Dihalogenbenzols mit Vinylacetat oder einem Halogenalkan, wie im folgenden Schema (Syntheseschema 1) skizziert. Die Beispiele sind anhand der oben genannten Struktur **(I)'** gezeigt, aber entsprechend für die Synthese einer Verbindung der oben genannten Struktur **(II)'**. R^{A}, R^{B}, R^{C}, R^{D} entsprechen A¹'-R¹', A²'-R²', A³'-R³', A⁴'-R⁴' aus der Struktur **(I)'**, Ar bezeichnet einen aromatischen 3-Ring, 5-Ring oder 6-Ring, z.B. Phenylen.

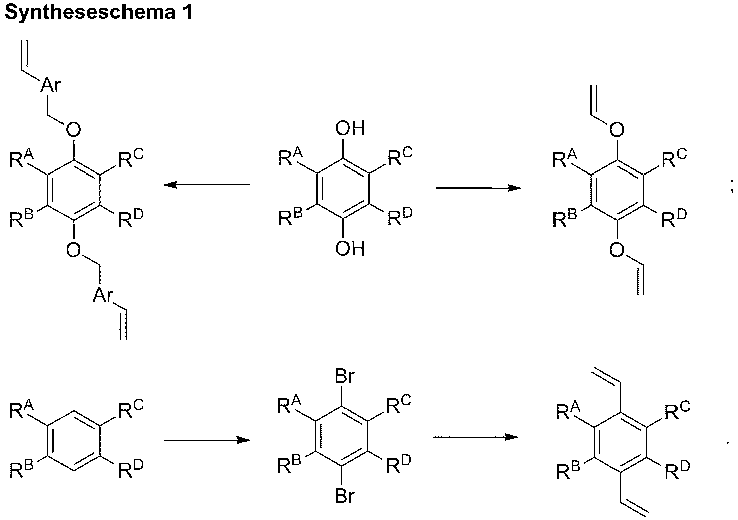

Die erfindungsgemäßen Polymere gemäß den chemischen Strukturen **(I)** und **(II)** können durch dem Fachmann geläufige Polymerisationsmethoden wie kationische Polymerisation (analog Polyvinylether), radikalische Polymerisation (analog Polystyrol) oder anionische Polymerisation aus den jeweiligen Monomeren **(I)'**, **(II)'** und **(III)'** synthetisiert werden.

Die kationische Polymerisation wird bevorzugt in einem Temperaturbereich von -30 bis 150 °C, vorteilhaft in einem Temperaturbereich von -20 bis 50 °C, in einem Lösungsmittel und einer Reaktionszeit von 0.1 bis 100 Stunden unter der Verwendung eines Katalysators, wie beispielsweise Lewissäuren oder Protonensäuren, bevorzugt Schwefelsäure, Salpetersäure, Perchlorsäure, Bortrifluoretherat-Komplex, Aluminiumtrichlorid, Zinntetrachlorid oder Titantetrachlorid, durchgeführt. Für verwendete Lösungsmittel besteht keine Einschränkung. Bevorzugt sind organische Lösungsmittel, wie beispielsweise *N*,*N*'-Dimethylformamid, *N*,*N*'-Dimethylacetamid, Dimethylsulfoxid, *N*-Methylpyrrolidon, Dichlormethan, Tetrahydrofuran, 1,4-Dioxolan, 1,2-Dichlorethan, Toluol, Xylol, Chlorbenzol, o-Dichlorbenzol.

Die radikalische Polymerisation kann ausgewählt sein aus der Gruppe bestehend aus kontrollierter radikalischer Polymerisationsmethode, wie beispielsweise Reversible Addition-Fragmentation Chain Transfer Polymerisation (RAFT), Atom-Transfer Radical Polymerisation (ATRP) oder Nitroxide-Mediated Polymerisation (NMP), in einem Temperaturbereich von -30 bis 150 °C, vorteilhaft in einem Temperaturbereich von 40 bis 120 °C, in einem Lösungsmittel und in einer Reaktionszeit von 0.1 bis 100 Stunden unter der Verwendung eines Initiators, wie beispielsweise Azoverbindungen oder Peroxide, bevorzugt Benzoylperoxid oder 2,2'-Azobisisobutyrolnitril, durchgeführt werden. Für verwendete Lösungsmittel besteht keine Einschränkung. Bevorzugt sind organische Lösungsmittel, wie beispielsweise *N*,*N*'-Dimethylformamid, *N*,*N*'-Dimethylacetamid, Dimethylsulfoxid, *N*-Methylpyrrolidon, Dichlormethan, Tetrahydrofuran, 1,4-Dioxolan, 1,2-Dichlorethan, Toluol, Xylol, Chlorbenzol, o-Dichlorbenzol.

Die anionische Polymerisation wird bevorzugt in einem Temperaturbereich von -78 bis 150 °C, vorteilhaft in einem Temperaturbereich von -50 bis 50 °C, in einem Lösungsmittel und einer Reaktionszeit von 0.1 bis 100 Stunden unter der Verwendung eines Katalysators, wie beispielsweise Lewisbasen oder Basen, bevorzugt Metallamide, wie Natriumamid und LiC₂H₅, Alkoxiden wie Methanolat oder Ethanolat, Hydroxide wie Natriumhydroxyd oder Kaliumhydroxyd, Cyaniden, Phosphinen, Aminen oder metallorganischen Verbindungen wie beispielsweise *n*-Buthyllithium oder Vinylmagnesiumbromid synthetisiert werden. Für verwendete Lösungsmittel bestehen keine Einschränkungen. Bevorzugt sind organische Lösungsmittel, wie beispielsweise, Tetrahydrofuran, 1,4-Dioxolan, Diethylether, *tert*-Butylmethylether, Toluol, Xylol, Chlorbenzol oder o-Dichlorbenzol.

Es hat sich als vorteilhaft erwiesen, die kationische, anionische oder radikalische Polymerisation in Gegenwart von Leitfähigkeitsadditiven wie zum Beispiel den nachfolgend beschriebenen Kohlenstoffmaterialien (und auch Ruß wie zum Beispiel "SuperP®") durchzuführen, wie in A. Vlad, J. Rolland, G. Hauffman, B. Ernould, J.-F. Gohy, ChemSusChem 2015, 8, 1692 - 1696 für andere Polymere beschrieben.

Alternativ können die erfindungsgemäßen Polymere gemäß den chemischen Strukturen **(I)** und **(II)** auch durch polymeranaloge Reaktionen hergestellt werden. Dabei kann eine Verbindung der folgenden Struktur **(I)"** oder **(II)"** mit einer polymeren Struktur **(III)"** umgesetzt werden.

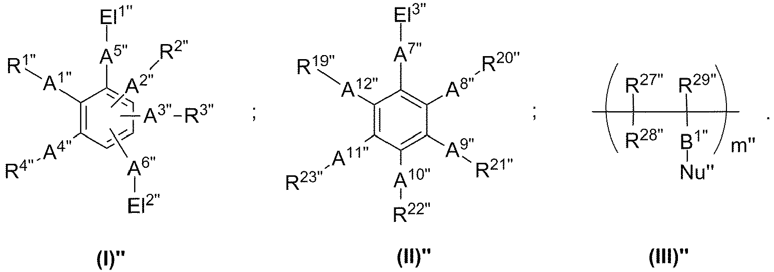

In den Strukturen **(I)"** oder **(II)"** haben die Reste R¹" bis R⁴", R¹⁹" bis R²³", R²⁷" bis R²⁹" und A¹" bis A¹²" jeweils die vorstehend für R¹ bis R⁴, R¹⁹ bis R²³, R²⁷ bis R²⁹ und A¹ bis A¹² angegebenen Bedeutungen. m" hat die für m³ angegebene Bedeutung.

Nu" ist eine nukleophile Gruppe, bevorzugt Hydroxy, und EI¹", EI²", EI³" sind jeweils elektrophile organische Gruppen. Im Falle dass A⁵", A⁶", A⁷" Sauerstoff ist, handelt es sich bei EI¹", EI²", EI³" bevorzugt jeweils um einen einwertigen Haloalkylrest, wobei das Halogen bevorzugt Chlor, Brom oder Jod ist.

Im Falle dass A⁵", A⁶", A⁷" eine direkte Bindung ist, handelt es sich bei EI¹", EI²", EI³" bevorzugt jeweils um eine Gruppe ausgewählt aus Isocyanat, Carbonsäure, Carbonylgruppe, Carbonsäureanhydrid, Carbonsäurehalogenid (wobei das Halogen im Carbonsäurehalogenid bevorzugt Chlor, Brom oder Jod ist), Haloalkylrest (wobei das Halogen im Haloalkylrest bevorzugt Chlor, Brom oder Jod ist).

A⁵"- EI¹", A⁶"-EI²", A⁷"-EI³" werden jeweils nukleophil von der Gruppe Nu" angegriffen und somit wird eine kovalente Bindung zwischen der Verbindung der Struktur **(I)"** bzw. **(II)"** mit **(III)"** hergestellt. B¹" ist so definiert, dass die durch die Reaktion zwischen EI¹", EI²", EI³" und Nu" entstehende Gruppe zusammen mit B¹" die für B¹, B² bzw. B³ angegebene Bedeutung haben.

Die folgenden Beispiele (gezeigt im Syntheseschema 2) sind anhand der oben genannten Struktur **(II)"** gezeigt, aber entsprechend für die Reaktion einer Verbindung der oben genannten Struktur **(I)"**. R^{E}, R^{F}, R^{G}, R^{H}, R^{J} entsprechen A¹²"-R¹⁹", A⁸"-R²⁰", A⁹"-R²¹", A¹⁰"-R²²" bzw. A¹¹"-R²³" aus der Struktur **(II)".**

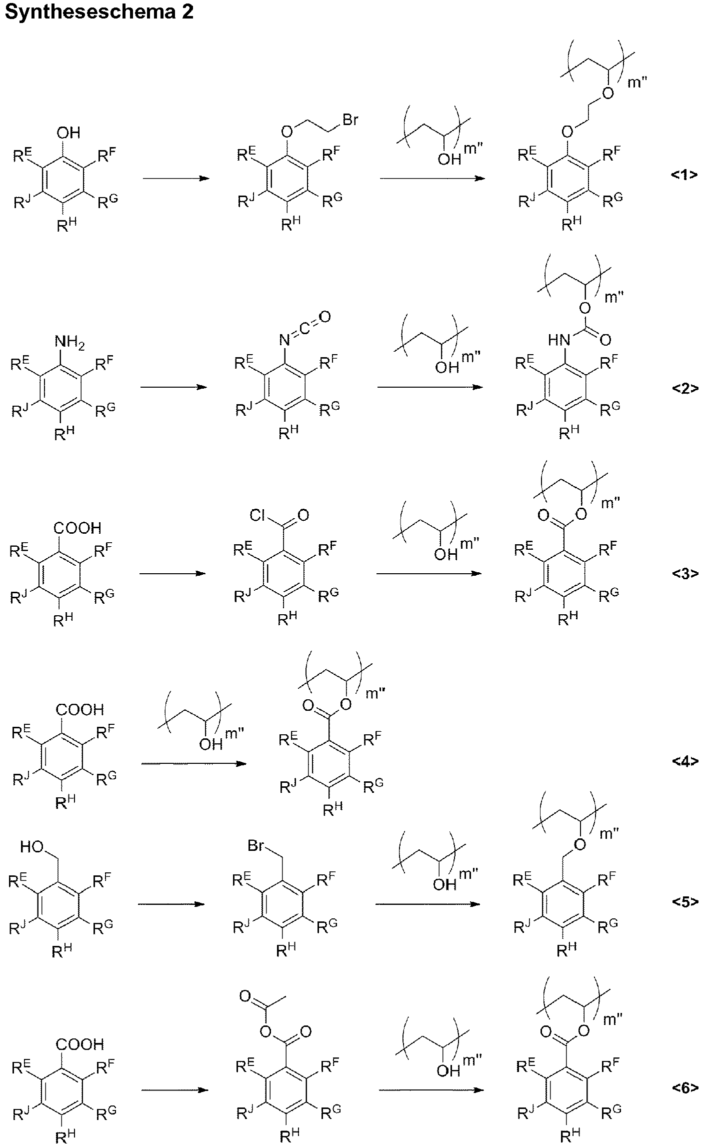

Die Reaktionsbedingungen, die in den vorgenannten Reaktionen **<1>** - **<6>** aus Syntheseschema 2 anzuwenden sind, sind dem Fachmann geläufig.

Im Fall, in dem A⁷" in der allgemeinen Formel **(II)"** einer direkten Bindung und EI³" einer Isocyanatgruppe entspricht, kann die Umsetzung mit der polymeren Verbindung nach einer bekannten Methode der Synthese von Urethanen und deren Abwandlungen durchgeführt werden (siehe Syntheseschema 2, Reaktion **<2>**). Bevorzugt wird die Umsetzung dann in einem Temperaturbereich von -78 bis 150 °C, vorteilhaft in einem Temperaturbereich von -40 bis 120 °C, und in einem Lösungsmittel und in einer Reaktionszeit von 0.1 bis 100 Stunden durchgeführt. Für verwendete Lösungsmittel bestehen keine Einschränkungen. Bevorzugt sind aprotische organische Lösungsmittel, wie beispielsweise *N*,*N*'-Dimethylformamid, *N*,*N*'-Dimethylacetamid, Dimethylsulfoxid, *N*-Methylpyrrolidon, Dichlormethan, 1,2-Dichlorethan, Toluol, Xylol, Chlorbenzol oder *o*-Dichlorbenzol.

Im Fall, in dem A⁷" in der allgemeinen Formel **(II)"** einer direkten Bindung und EI³" einer Carbonsäurehalogenidgruppe entspricht, kann die Umsetzung mit der polymeren Verbindung nach einer bekannten Methode der Synthese von Carbonsäureestern und deren Abwandlungen durchgeführt werden (siehe Syntheseschema 2, Reaktion **<3>**). Bevorzugt wird die Umsetzung dann in einem Temperaturbereich von -78 bis 150 °C, vorteilhaft in einem Temperaturbereich von - 40 bis 120 °C und in einem Lösungsmittel und in einer Reaktionszeit von 0.1 bis 100 Stunden unter der Verwendung eines Katalysators, wie beispielsweise eines Pyridinderivates, wie typischerweise 4-(Dimethylamino)pyridine, oder eines Carbodiimidderivates wie typischerweise *N*,*N*'-Dicyclohexylcarbodiimide durchgeführt. Für verwendete Lösungsmittel bestehen keine Einschränkungen. Bevorzugt sind aprotische organische Lösungsmittel, wie beispielsweise *N*,*N*'-Dimethylformamid, *N*,*N*'-Dimethylacetamid, Dimethylsulfoxid, *N*-Methylpyrrolidin, Dichlormethan, 1,2-Dichlorethan, Toluol, Xylol, Chlorbenzol oder o-Dichlorbenzol.

Im Fall, in dem A⁷" in der allgemeinen Formel **(II)"** einer direkten Bindung und EI³" einer Carbonsäuregruppe entspricht, kann die Umsetzung mit der polymeren Verbindung nach einer bekannten Methode der Synthese von Carbonsäureestern und deren Abwandlungen durchgeführt werden (siehe Syntheseschema 2, Reaktion **<4>**). Bevorzugt wird die Umsetzung dann in einem Temperaturbereich von -78 bis 150 °C, vorteilhaft in einem Temperaturbereich von - 40 bis 120 °C und in einem Lösungsmittel und in einer Reaktionszeit von 0.1 bis 100 Stunden unter der Verwendung eines Katalysators, wie beispielsweise eines Pyridinderivates, wie typischerweise 4-(Dimethylamino)pyridin, oder eines Carbodiimidderivates wie typischerweise *N*,*N*'-Dicyclohexylcarbodiimid durchgeführt. Für verwendete Lösungsmittel bestehen keine Einschränkungen. Bevorzugt sind aprotische organische Lösungsmittel, wie beispielsweise *N*,*N*'-Dimethylformamid, *N*,*N*'-Dimethylacetamid, Dimethylsulfoxid, *N*-Methylpyrrolidin, Dichlormethan, 1,2-Dichlorethan, Toluol, Xylol, Chlorbenzol oder o-Dichlorbenzol.

Im Fall, in dem A⁷" in der allgemeinen Formel **(II)"** einer direkten Bindung und EI³" einem Haloalkylrest entspricht, kann die Umsetzung mit der polymeren Verbindung nach einer bekannten Methode der Synthese von Ethern und deren Abwandlungen durchgeführt werden (siehe Syntheseschema 2, Reaktion **<5>**; entsprechendes gilt für EI³" = Benzylhalogenidgruppe, in Syntheseschema 2 nicht gezeigt). Bevorzugt wird die Umsetzung dann in einem Temperaturbereich von - 78 bis 150 °C, vorteilhaft in einem Temperaturbereich von - 40 bis 120 °C, in einem Lösungsmittel und in einer Reaktionszeit von 0.1 bis 100 Stunden unter der Verwendung eines Katalysators, wie beispielsweise einer Base wie Natriumhydrid, Natriumhydroxid, Kalium *tert*-Butylat, 1,8-Diazabicyclo[5.4.0]undec-7-en oder 1,5-Diazabicyclo[4,3,0]non-5-en durchgeführt. Für verwendete Lösungsmittel bestehen keine Einschränkungen. Bevorzugt sind aprotische organische Lösungsmittel, wie beispielsweise N,N'-Dimethylformamid, *N*,*N*'-Dimethylacetamid, Dimethylsulfoxid, *N*-Methylpyrrolidon, Dichlormethan, 1,2-Dichlorethan, Toluol, Xylol, Chlorbenzol oder *o*-Dichlorbenzol.

Im Fall, in dem A⁷" in der allgemeinen Formel **(II)"** einer direkten Bindung und EI³" einer Carbonsäureanhydridgruppe entspricht, kann die Umsetzung mit der polymeren Verbindung nach einer bekannten Methode der Synthese von Carbonsäureestern und deren Abwandlungen durchgeführt werden (siehe Syntheseschema 2, Reaktion **<6>**). Bevorzugt wird die Umsetzung dann in einem Temperaturbereich von -78 bis 150 °C, vorteilhaft in einem Temperaturbereich von - 40 bis 120 °C, in einem Lösungsmittel und in einer Reaktionszeit von 0.1 bis 100 Stunden unter der Verwendung eines Katalysators, wie beispielsweise eines Pyridinderivates, wie typischerweise 4-(Dimethylamino)pyridin, oder eines Carbodiimidderivates wie typischerweise *N*,*N*'-Dicyclohexylcarbodiimid durchgeführt. Für verwendete Lösungsmittel bestehen kaum Einschränkungen. Bevorzugt sind aprotische organische Lösungsmittel, wie beispielsweise *N*,*N*'-Dimethylformamid, *N*,*N*'-Dimethylacetamid, Dimethylsulfoxid, *N*-Methylpyrrolidin, Dichlormethan, 1,2-Dichlorethan, Toluol, Xylol, Chlorbenzol oder o-Dichlorbenzol.

In der polymeranalogen Reaktion kann auch eine Verbindung der folgenden Struktur **(I)"'** oder **(II)"'** mit einer polymeren Struktur **(III)"'** umgesetzt werden.

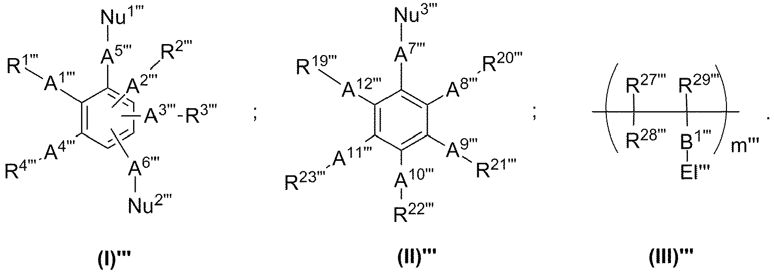

In den Strukturen **(I)"'** oder **(II)"'** haben die Reste R¹"' bis R⁴"', R¹⁹"' bis R²³"', R²⁷"' bis R²⁹"' und A¹"' bis A¹²"' jeweils die vorstehend für R¹ bis R⁴, R¹⁹ bis R²³, R²⁷ bis R²⁹ und A¹ bis A¹² angegebenen Bedeutungen. m"' hat die für m³ angegebene Bedeutung.

A⁵"'- Nu¹"',A⁶"'- Nu²"', A⁷"'- Nu³"' stellen nukleophile Gruppen dar. Im Falle dass A⁵"', A⁶"', A⁷"' Sauerstoff ist, handelt es sich bei Nu¹"', Nu²"', Nu³"' bevorzugt jeweils um einen Wasserstoffrest. Im Falle dass A⁵", A⁶", A⁷" eine direkte Bindung ist, handelt es sich bei Nu¹"', Nu²"', Nu³"' bevorzugt jeweils um eine Hydroxyalkyl- oder Thioalkylgruppe.

EI''' ist eine elektrophile organische Gruppe, bevorzugt Halogenalkyl, noch bevorzugter Chloralkyl, Bromalkyl oder lodalkyl, insbesondere Chloralkyl, oder für B¹"' = direkte Bindung auch ein Halogenrest.

EI"' wird jeweils nukleophil von der A⁵"'- Nu¹"',A⁶"'- Nu²"' oder A⁷"'- Nu³"' angegriffen und somit wird eine kovalente Bindung zwischen der Verbindung der Struktur **(I)"'** bzw. **(II)"'** mit **(III)"'** hergestellt. B¹"' ist ansonsten so definiert, dass die durch die Reaktion zwischen EI¹"', EI²"', EI³"' und Nu"' entstehende Gruppe zusammen mit B¹"' die für B¹, B² bzw. B³ angegebene Bedeutung haben.

Die folgenden Beispiele (gezeigt im Syntheseschema 3) sind anhand der oben genannten Struktur **(II)"'** gezeigt, aber entsprechend für die Reaktion einer Verbindung der oben genannten Struktur **(I)"'**. R^{K}, R^{L}, R^{M}, R^{N}, R^{P} entsprechen A¹²"'-R¹⁹"', A⁸"'-R²⁰"', A⁹"'-R²¹"', A¹⁰"'-R²²"' bzw. A¹¹"'-R²³"' aus der Struktur **(II)"'**.

Die Reaktionsbedingungen, die in den nachgenannten Reaktionen <1> - <4> aus Syntheseschema 3 anzuwenden sind, sind dem Fachmann geläufig.

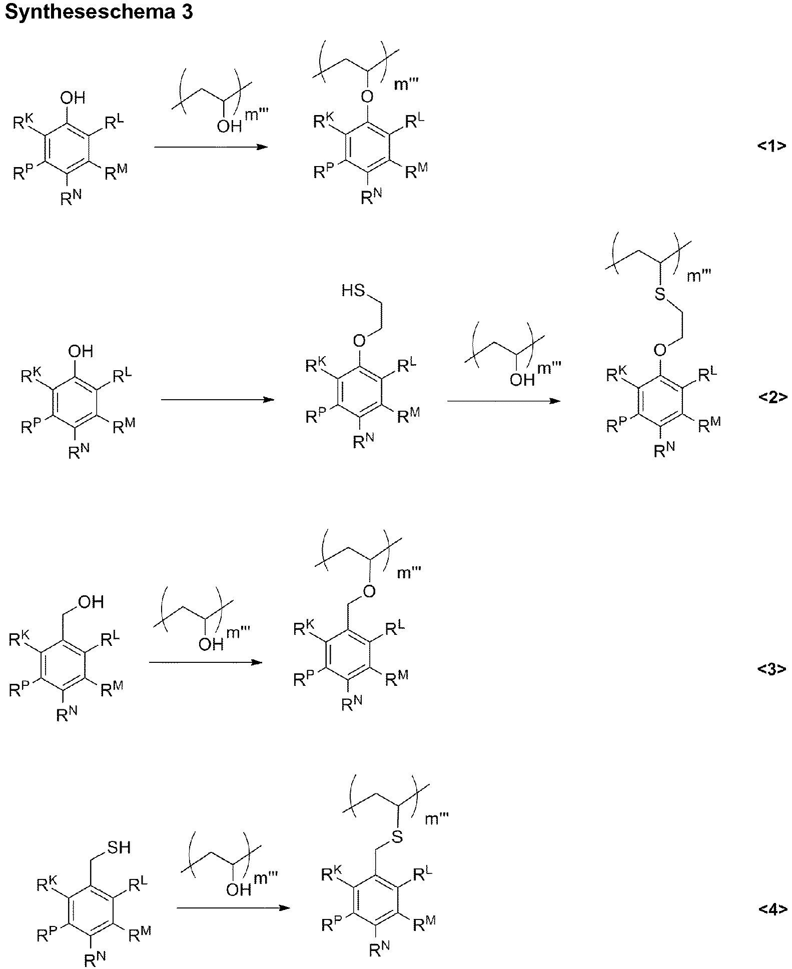

Im Fall, in dem A⁷"'-Nu³"' in der allgemeinen Formel **(II)**"' einer Hydroxygruppe (Syntheseschema 3, Reaktion **<1>**) oder einer Thioalkoxygruppe (Syntheseschema 3, Reaktion **<2>**) und EI³" ebenfalls einer Hydroxygruppe ist, kann die Umsetzung mit der polymeren Verbindung nach einer bekannten Methode der Synthese von Ethern und deren Abwandlungen durchgeführt werden. Bevorzugt wird die Umsetzung dann in einem Temperaturbereich von - 78 bis 150 °C, vorteilhaft in einem Temperaturbereich von - 40 bis 120 °C, in einem Lösungsmittel und in einer Reaktionszeit von 0.1 bis 100 Stunden unter der Verwendung eines Katalysators, wie beispielsweise einer Base wie Natriumhydrid, Natriumhydroxid, Kalium *tert*-butylat, 1,8-Diazabicyclo[5.4.0]undec-7-en oder 1,5-Diazabicyclo[4,3,0]non-5-en durchgeführt. Für verwendete Lösungsmittel bestehen keine Einschränkungen. Bevorzugt sind aprotische organische Lösungsmittel, wie beispielsweise *N*,*N*'-Dimethylformamid, *N*,*N*'-Dimethylacetamid, Dimethylsulfoxid, *N*-Methylpyrrolidon, Dichlormethan, 1,2-Dichlorethan, Toluol, Xylol, Chlorbenzol oder o-Dichlorbenzol.

Genauso kann in der polymeranalogen Reaktion auch ein Azid mit einem Polyalkin umgesetzt werden (Syntheseschema 4). m"' hat darin die für m³ angegebene Bedeutung. R^{K}, R^{L}, R^{M}, R^{N}, R^{P} haben die vorstellig angegebenen Bedeutungen.

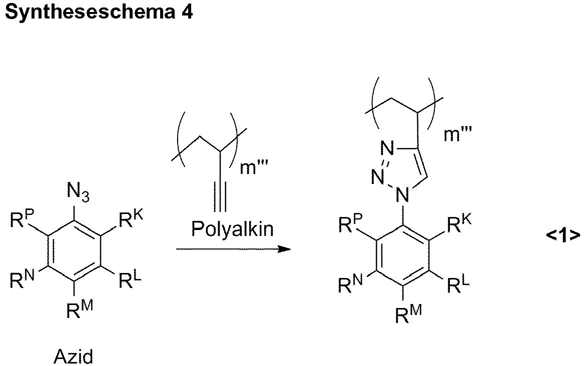

Die Umsetzung mit dem Polyalkin kann nach einer bekannten Methode der Azid/Alkin Click-Reaktion und deren Abwandlungen synthetisiert werden (siehe Syntheseschema 4, Reaktion <1>). Bevorzugt werden die oben genannten Verbindungen in einem Temperaturbereich von -78 bis 150 °C, vorteilhaft in einem Temperaturbereich von -40 bis 120 °C, in einem Lösungsmittel und in einer Reaktionszeit von 0.1 bis 100 Stunden synthetisiert. Für verwendete Lösungsmittel besteht keine Einschränkung. Bevorzugt sind aprotische organische Lösungsmittel, wie beispielsweise *N*,*N*'-Dimethylformamid, *N*,*N*'-Dimethylacetamid, Dimethylsulfoxid, *N*-Methylpyrrolidon, Dichlormethan, 1,2-Dichlorethan, Toluol, Xylol, Chlorbenzol oder *o*-Dichlorbenzol.

Das erfindungsgemäße Polymer eignet sich insbesondere zur Verwendung als redoxaktives Elektrodenmaterial in einem elektrischen Ladungsspeicher, bevorzugt zur Speicherung elektrischer Energie, und noch bevorzugter als positives Elektrodenelement.

Noch bevorzugter ist das redoxaktive Elektrodenmaterial dabei als mindestens teilweise Oberflächenbeschichtung von Elektrodenelementen für elektrische Ladungsspeicher, insbesondere Sekundärbatterien, ausgebildet. Elektrodenelemente umfassen dabei mindestens eine Oberflächenschicht und ein Substrat.

Ein redoxaktives Material zur Speicherung elektrischer Energie ist ein Material, welches elektrische Ladung beispielsweise durch Aufnahme bzw. Abgabe von Elektronen speichern und wieder abgeben kann. Dieses Material kann beispielsweise als aktives Elektrodenmaterial in einem elektrischen Ladungsspeicher eingesetzt werden. Solche elektrischen Ladungsspeicher zur Speicherung elektrischer Energie sind insbesondere aus der Gruppe bestehend aus Sekundärbatterien (oder auch "Akkumulatoren" genannt), Redox-Flowbatterien, Superkondensatoren ausgewählt und bevorzugt Sekundärbatterien.

Bevorzugt handelt es sich bei dem elektrischen Ladungsspeicher um eine Sekundärbatterie. Eine Sekundärbatterie umfasst eine negative und eine positive Elektrode, die durch einen Separator voneinander getrennt werden, sowie einem Elektrolyt, welcher die Elektroden und den Separator umschließt.

Der Separator ist eine poröse Schicht, die ionendurchlässig ist und den Ladungsausgleich ermöglicht. Die Aufgabe des Separators besteht darin, die positive Elektrode von der negativen Elektrode zu trennen und den Ladungsausgleich durch Permutation von Ionen zu ermöglichen. Als Separator der sekundären Batterie wird insbesondere ein poröses Material, bevorzugt eine Membran bestehend aus einer polymeren Verbindung, wie beispielsweise Polyolefin, Polyamid, oder Polyester, verwendet. Weiterhin können Separatoren aus porösen keramischen Materialien verwendet werden.

Die Hauptaufgabe des Elektrolyten ist, die lonenleitfähigkeit zu gewährleisten, die zum Ladungsausgleich nötig ist. Der Elektrolyt der sekundären Batterie kann sowohl eine Flüssigkeit, als auch eine oligomere oder polymere Verbindung mit hoher lonenleitfähigkeit ("*gel electrolyte*" oder "*solid state electrolyte*") sein. Bevorzugt ist er aber eine oligomere oder polymere Verbindung. Ist der Elektrolyt flüssig, so setzt er sich insbesondere aus einem oder mehreren Lösungsmitteln und einem oder mehreren Leitsalzen zusammen.

Das Lösungsmittel der Elektrolyten umfasst bevorzugt unabhängig voneinander eines oder mehrere Lösungsmittel mit hohem Siedepunkt und hoher lonenleitfähigkeit, aber niedriger Viskosität, wie beispielsweise Acetonitril, Dimethylsulfoxid, Ethylencarbonat, Propylencarbonat, Dimethylcarbonat, Diethylcarbonat, Methylethylcarbonat, γ-Butyrolacton, Tetrahydrofuran, Dioxolan, 1,2-Dimethoxyethan, 1,2-Diethoxyethan, Diglyme, Triglyme, Tetraglyme, Ethylacetat, 1,3-Dioxolan oder Wasser.

Das Leitsalz des Elektrolyten besteht aus einem Kation der Formel M^{e+} und einem Anion oder Formel An^{f-} der Formel (M^{e+})ₐ(An^{f-})_{b}, wobei e und f Ganzzahlen in Abhängigkeit der Ladung von M und An sind; a und b sind Ganzzahlen, welche die molekulare Zusammensetzung des Leitsalzes repräsentieren.

Als Kation des oben genannten Leitsalzes werden positiv geladene Ionen, bevorzugt Metalle der ersten und zweiten Hauptgruppe, wie beispielsweise Lithium, Natrium, Kalium oder Magnesium, aber auch andere Metalle der Nebengruppen, wie Zink, sowie organische Kationen, wie beispielsweise quartäre Ammoniumverbindungen wie Tetraalkylammoniumverbindungen, verwendet. Bevorzugtes Kation ist Lithium.

Als Anionen des besagten Leitsalzes werden bevorzugt anorganische Anionen, wie Hexafluorophosphat, Tetrafluoroborat, Triflat, Hexafluoroarsenat, Hexafluoroantimonat, Tetrafluoroaluminat, Tetrafluoroindat, Perchlorat, Bis(oxolato)borat, Tetrachloroaluminiat, Tetrachlorogallat, aber auch organische Anionen, wie beispielsweise N(CF₃SO₂)2, CF₃SO₃⁻, Alkoholate, wie beispielsweise, *tert*-Butanolat oder *iso*-Propylalkoholat, aber auch Halogenide, wie Fluorid, Chlorid, Bromid sowie lodid, verwendet. Bevorzugtes Anion ist Perchlorat, CtO₄⁻. Bevorzugtes Leitsalz ist somit LiClO₄.

Werden ionische Flüssigkeiten verwendet, können diese sowohl als Lösungsmittel des Elektrolyten, als Leitsalz aber auch als kompletter Elektrolyt verwendet werden.

In der Ausführungsform, in der das redoxaktive Elektrodenmaterial dabei als mindestens teilweise Oberflächenbeschichtung von Elektrodenelementen für elektrische Ladungsspeicher, insbesondere Sekundärbatterien, ausgebildet ist, weist ein Elektrodenelement mindestens teilweise eine Schicht auf einer Substratoberfläche auf. Diese Schicht umfasst insbesondere eine Zusammensetzung, enthaltend das erfindungsgemäße Polymer als redoxaktives Material zur Ladungsspeicherung und insbesondere zumindest auch ein Leitfähigkeitsadditiv sowie insbesondere auch zumindest ein Bindeadditiv.

Die Aufbringung dieser Zusammensetzung (anderer Ausdruck für Zusammensetzung: "Komposit") auf dem Substrat ist mittels dem Fachmann bekannten Verfahren möglich. Insbesondere wird das erfindungsgemäße Polymer mit Hilfe eines Elektrodenslurrys auf dem Substrat aufgebracht.

Das Substrat des Elektrodenelements ist insbesondere ausgewählt aus leitfähigen Materialien, bevorzugt Metallen, Kohlenstoffmaterialien, Oxidsubstanzen.

Bevorzugte Metalle sind ausgewählt aus Platin, Gold, Eisen, Kupfer, Aluminium oder eine Kombination aus diesen Metallen. Bevorzugte Kohlenstoffmaterialien, sind ausgewählt aus Glaskohlenstoff, Graphitfolie, Graphen, Kohlenstofffelle. Bevorzugte Oxidsubstanzen sind beispielsweise ausgewählt aus der Gruppe bestehend aus Indiumzinnoxid (ITO), Indiumzinkoxid (IZO), Antimonzinkoxid (AZO), Fluorzinnoxid (FTO) oder Antimonzinnoxid (ATO).

Die Oberflächenschicht des Elektrodenelements umfasst zumindest das erfindungsgemäße Polymer als redoxaktives Material zur Ladungsspeicherung sowie insbesondere zumindest ein Leitfähigkeitsadditiv und ein Bindeadditiv.

Das Leitfähigkeitsadditiv ist insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstofffasern, Kohlenstoffnanoröhren, Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen)polystyrensulfonat (= PEDOT:PSS), Polyarcene ausgewählt.

Bindeadditive sind insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Das erfindungsgemäße Polymer wird dabei insbesondere in einem Elektrodenslurry auf das Substrat des Elektrodenelementes aufgebracht.

Der Elektrodenslurry ist eine Lösung oder Suspension und umfasst das erfindungsgemäße Polymer sowie insbesondere das vorstehend beschriebene Leitfähigkeitsadditiv und das vorstehend beschriebene Bindeadditiv.

Der Elektrodenslurry umfasst bevorzugt ein Lösungsmittel und weitere Bestandteile umfassend redoxaktives Material zur Speicherung elektrischer Energie (bei dem es sich insbesondere um das erfindungsgemäße Polymer handelt), sowie bevorzugt auch das Leitfähigkeitsadditiv und das Bindeadditiv.

In den weiteren Bestandteilen ist bevorzugt der Anteil an redoxaktivem Material zur Speicherung elektrischer Energie (bei dem es sich insbesondere um das erfindungsgemäße Polymer handelt) von 5 bis 100 Gewichtsprozent, der Anteil des Leitfähigkeitsadditiv 0 bis 80, bevorzugt 5 bis 80, Gewichtsprozent, und der Anteil an Bindeadditiv 0 bis 10, bevorzugt 1 bis 10, Gewichtsprozent, wobei die Summe 100 Gewichtsprozent ergibt.

Als Lösungsmittel für den Elektrodenslurry werden unabhängig voneinander ein oder mehrere Lösungsmittel, bevorzugt Lösungsmittel mit hohem Siedepunkt, bevorzugter ausgewählt aus der Gruppe bestehend aus *N*-Methyl-2-pyrrolidon, Wasser, Dimethylsulfoxid, Ethylencarbonat, Propylencarbonat, Dimethylcarbonat, Methylethylcarbonat, γ-Butyrolacton, Tetrahydrofuran, Dioxolan, Sulfolan, *N*,*N*'-Dimethylformamid, *N*,*N*'-Dimethylacetamid, verwendet. Die Konzentration des redoxaktiven Materials, insbesondere des erfindungsgemäßen Polymers, zur Speicherung elektrischer Energie im oben genannten Elektrodenslurry beträgt bevorzugt zwischen 0.1 und 10 mg/ml, besonders bevorzugt zwischen 0.5 und 5 mg/ml.

Wird das Polymer dieser Erfindung als redoxaktives Material für elektrische Ladungsspeicher als positives Elektrodenelement verwendet, so wird als redoxaktives Material zur elektrischen Ladungsspeicherung in der negativen Elektrode ein Material verwendet, welches eine Redoxreaktion bei einem niedrigeren elektrochemischen Potential als das Polymer dieser Erfindung zeigt. Bevorzugt sind solche Materialien ausgewählt aus der Gruppe bestehend aus Kohlenstoffmaterialien, die insbesondere aus der Gruppe bestehend aus Graphit, Graphen, Ruß, Kohlenstofffasern, Kohlenstoffnanoröhren ausgewählt sind, Metalle oder Legierungen, die insbesondere aus der Gruppe bestehend aus Lithium, Natrium, Magnesium, Lithium-Aluminium, Li-Si, Li-Sn, Li-Ti, Si, SiO, SiO₂, Si-SiO₂-Komplex, Zn, Sn, SnO, SnO₂, PbO, PbO₂, GeO, GeO₂, WO₂, MoO₂, Fe₂O₃, Nb₂O₅, TiO₂, Li₄Ti5O₁₂, und Li₂Ti₃O7 ausgewählt sind, sowie organische redoxaktives Materialien. Beispiele organischer redoxaktiver Materialien sind Verbindungen mit einem stabilen organischen Radikal, Verbindungen mit einer Organoschwefeleinheit, mit einer Chinonstruktur, Verbindungen mit einem Dionsystem, konjugierte Carbonsäuren und deren Salze, Verbindungen mit einer Phtalimid- bzw. Naphtalimidstruktur, Verbindungen mit einer Disulfidverbindung sowie Verbindungen mit einer Phenanthrenstruktur und deren Derivate. Wird in der negativen Elektrode eine oben genannte redoxaktive oligomere oder polymere Verbindung eingesetzt, so kann diese Verbindung auch ein Komposit, also eine Zusammensetzung, sein, bestehend aus dieser oligomeren oder polymeren Verbindung, einem Leitfähigkeitsadditiv und einem Bindeadditiv in einem beliebigen Verhältnis. Das Leitfähigkeitsadditiv ist auch in diesem Fall insbesondere mindestens ein elektrisch leitendes Material, bevorzugt ausgewählt aus der Gruppe bestehend aus Kohlenstoffmaterialen, elektrisch leitenden Polymeren, insbesondere sind es Kohlenstoffmaterialien. Kohlenstoffmaterialien sind insbesondere aus der Gruppe bestehend aus Kohlenstofffasern, Kohlenstoffnanoröhren, Graphit, Ruß, Graphen ausgewählt, und sind besonders bevorzugt Kohlenstofffasern. Elektrisch leitende Polymere sind insbesondere aus der Gruppe bestehend aus Polyanilinen, Polythiophenen, Polyacetylenen, Poly(3,4-ethylendioxythiophen) polystyrensulfonat (= "PEDOT:PSS"), Polyarcene ausgewählt. Bindeadditive sind auch in diesem Fall insbesondere Materialien mit Bindeeigenschaften und bevorzugt Polymere ausgewählt aus der Gruppe bestehend aus Polytetrafluoroethylen, Polyvinylidenfluorid, Polyhexafluoropropylen, Polyvinylchlorid, Polycarbonat, Polystyrol, Polyacrylate, Polymethacrylate, Polysulfone, Cellulosederivate, Polyurethane.

Dieses Komposit kann wie oben beschrieben mit Hilfe eines Elektrodenslurrys durch ein bekanntes Verfahren zur Filmbildung als Schicht auf einem Substrat vorliegen.

### Abbildungen

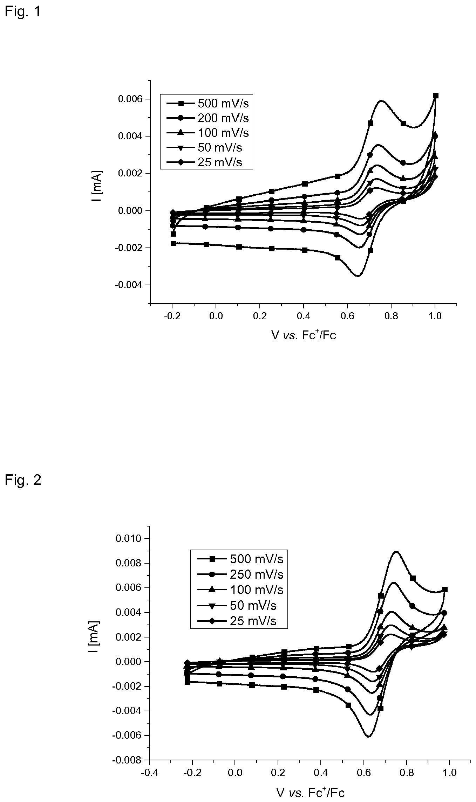

Abbildung 1 (= Fig. 1) zeigt das Cyclovoltamogramm von **2** (1 mmolar in CH₂Cl₂ mit 0.1 M TBAPF₆) bei verschiedenen Messgeschwindigkeiten (angegeben in mV/s). Die x-Achse gibt das Potential V an, die γ-Achse den Strom in mA an.

Abbildung 2 (= Fig. 2) zeigt das Cyclovoltamogramm von **5** in CH₂Cl₂ (1 mmolar in CH₂Cl₂ mit 0.1 M TBAClO₄) bei verschiedenen Messgeschwindigkeiten (angegeben in mV/s). Die x-Achse gibt das Potential V an, die γ-Achse den Strom in mA an.

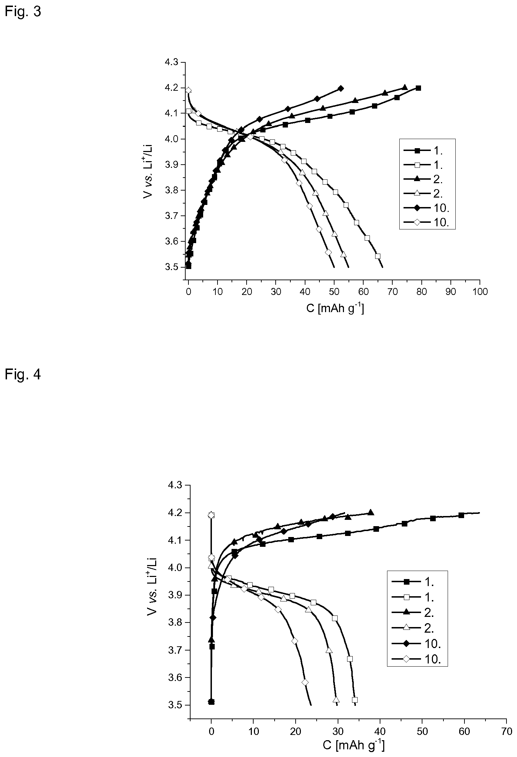

Abbildung 3 (= Fig. 3) gibt die gemessenen Spannungen V (y-Achse) über der Kapazität (x-Achse) einer mit **6** hergestellten, erfindungsgemäßen Elektrode nach 1 bzw. 2 bzw. 10 Lade-Entladezyklen an (Ladegeschwindigkeit = 1 C, das heißt volles Laden in 60 Minuten; Abschnitt 4.1). Die gefüllten Kästchen im Schaubild gehören zu den Ladezyklen, die leeren die Entladezyklen.

Abbildung 4 (= Fig. 4) gibt die gemessenen Spannungen V (y-Achse) über der Kapazität (x-Achse) einer mit **13** hergestellten, nicht erfindungsgemäßen Elektrode nach 1 bzw. 2 bzw. 10 Lade-Entladezyklen an (Ladegeschwindigkeit = 1 C, das heißt volles Laden in 60 Minuten; Abschnitt 4.2). Die gefüllten Kästchen im Schaubild gehören zu den Ladezyklen, die leeren die Entladezyklen.

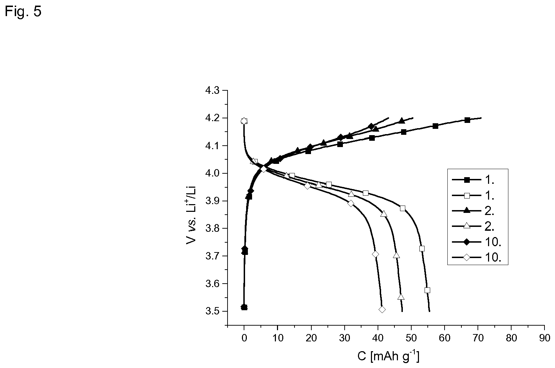

Abbildung 5 (= Fig. 5) gibt die gemessenen Spannungen V (y-Achse) über der Kapazität (x-Achse) einer mit **16** hergestellten, nicht erfindungsgemäßen Elektrode nach 1 bzw. 2 bzw. 10 Lade-Entladezyklen an (Ladegeschwindigkeit = 1 C, das heißt volles Laden in 60 Minuten; Abschnitt 4.3). Die gefüllten Kästchen im Schaubild gehören zu den Ladezyklen, die leeren die Entladezyklen.

Die nachfolgenden Beispiele sollen die vorliegende Erfindung erläutern, ohne diese in irgendeiner Form zu beschränken.

### Beispiele

### 1. Allgemeines

### 1.1 Abkürzungen

AIBN - Azobis(isobutyronitril); DMAP - Dimethylaminopyridin; DMF - Dimethylformamid; NEt₃-Triethylamin; TBAClO₄ - Tetrabutylammoniumperchlorat; TBAPF₆ - Tetrabutylammoniumhexafluorophosphat; THF - Tetrahydrofuran; Tol. - Toluol.

Die in den folgenden Reaktionsschemata angegebenen geklammerten Nummerierungen beziehen sich auf den jeweiligen Abschnitt, in dem die Synthese beschrieben ist.

### 1.2 Meßmethoden

¹H und ¹³C NMR Spektren wurden mit einem Bruker AC 300 (300 MHz) Spektrometer bei 298 K aufgenommen. Für Cyclovoltammetrie und galvinostatische Experimente stand ein Biologic VMP 3 Potentiostat zur Verfügung. Größenausschlusschromatographie wurde an einem Agilent 1200 series System (Entgaser: PSS, Pumpe: G1310A, Autosampler: G1329A, Oven: Techlab, DAD Detector: G1315D, RI Detector: G1362A, Eluent: DMAc + 0.21% LiCl, 1 ml/min, Temperatur: 40 °C, Säule: PSS GRAM guard/1000/30 Å) durchgeführt.

### 2. Erfinderische Beispiele

### 2.1 E1: Synthese und Polymerisation von 4,4'-((2,5-Di-tert-butyl-1,4-phenylen)bis(oxy))bis(methylen))bis(vinylbenzen) 2

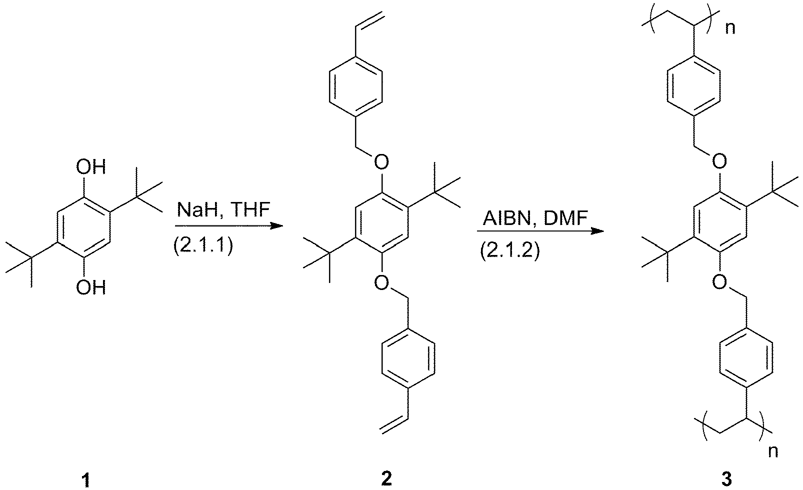

### 2.1.1 Synthese von 4,4'-(((2.5-Di-tert-butyl-1,4-phenylen)bis(oxy))bis(methylen))bis(vinylbenzen) 2

Eine 0.5 M Lösung von **1** (3 g, 13.5 mmol) in THF wurde in eine eisgekühlte Suspension von NaH (1.35 g, 33.7 mmol, 60% Dispersion in Mineralöl) in 15 mL THF getropft und nach vollständiger Zugabe 1 Stunde bei Raumtemperatur gerührt. Anschließend wurde 4-Vinylbenzylchlorid (5.6 mL, 40 mmol) zugegeben und die Reaktionsmischung für 48 Stunden bei 50 °C gerührt. Die Reaktion wurde mit Wasser gequencht und mit Dichlormethan extrahiert. Die organische Phase wurde mit MgSO₄ getrocknet, das Lösungsmittel im Vakuum entfernt und der Rückstand in Hexan/CH₂Cl₂ (4:1) gefällt. Es wurden 3.95 g (8.7 mmol, 64%) **2** als weißer Feststoff erhalten.
Abbildung 1 (= Fig. 1) zeigt das Cyclovoltamogramm von **2** (1 mmolar in CH₂Cl₂ mit 0.1 M TBAPF₆) bei verschiedenen Messgeschwindigkeiten.
¹H NMR (CDC₃, 300 MHz, ppm): δ 7.42 (8H), 6.90 (s, 2H), 6.72 (dd, 2H), 5.76 (d, 2H), 5.24 (d, 2H), 5.06 (s, 4H), 1.36 (s, 18H).

### 2.1.2 Polymerisation von 4,4'-(((2,5-Di-tert-butyl-1,4-phenylen)bis(oxy))bis(methylen))bis(vinylbenzen) 2 zu 3

Eine 0.5 M Lösung von **2** (100 mg, 0.22 mmol) in trockenen DMF und AIBN (1.80 mg, 0.011 mmol) wurden für 90 min mit Argon entgast. Die entgaste Lösung rührte für 16 Stunden bei 80 °C. Das Polymer wurde in Methanol ausgefällt und gewaschen. Dabei wurden 79 mg (0.17 mmol, 78.3 %) **3** als weißer Feststoff erhalten.

### 2.2 E2: Synthese und Polymerisation von 1,4-Di-tert-butyl-2-methoxy-5-((4-vinylbenzyl)oxy)benzen 5

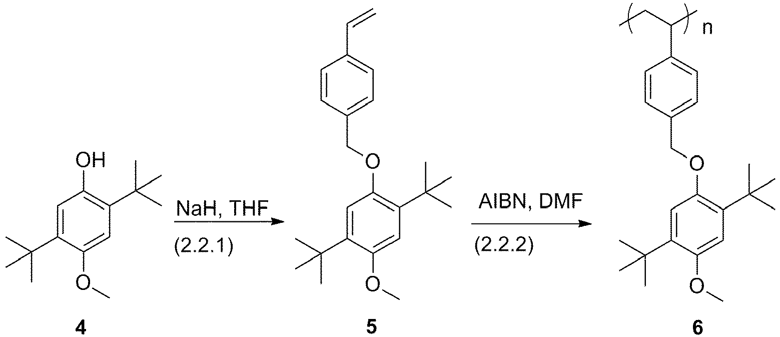

### 2.2.1 Synthese von 1,4-Di-tert-butyl-2-methoxy-5-((4-vinylbenzyl)oxy)benzen 5

Eine 0.4 M Lösung von **4** (2 g, 8.5 mmol) in THF wurde in eine eisgekühlte Suspension von NaH (507 mg, 12.7 mmol, 60% Dispersion in Mineralöl) in 10 mL THF getropft und nach vollständiger Zugabe noch 2 Stunden bei Raumtemperatur gerührt. Anschließend wurde 4-Vinylbenzylchlorid (3.6 mL, 25.4 mmol) zugegeben und die Reaktionsmischung für 48 Stunden bei 50 °C gerührt. Die Reaktion wurde mit Wasser gequencht und mit Dichlormethan extrahiert. Die organische Phase wurde mit MgSO₄ getrocknet, das Lösungsmittel und 4-Vinylbenzylchlorid im Vakuum entfernt und der Rückstand mittels Säulenchromatographie (Silicagel, Toluol/Hexan, 1:1) gereinigt. Es wurden 1.9 g (5.4 mmol, 63.5%) **5** als weißer Feststoff erhalten.
Abbildung 2 (= Fig. 2) zeigt das Cyclovoltamogramm von **5** in CH₂Cl₂ (1 mmolar in CH₂Cl₂ mit 0.1 M TBAClO₄) bei verschiedenen Messgeschwindigkeiten.
¹H NMR (CDCl₃, 300 MHz, ppm): δ 7.45 (4H), 6.90 (2H), 6.75 (dd, 1H), 5.78 (d, 1H), 5.27 (d, 1H), 5.08 (s, 2H), 3.83 (s, 3H), 1.39 (d, 18H).

### 2.2.2 Polymerisation von 1,4-Di-tert-butyl-2-methoxy-5-((4-vinylbenzyl)oxy)benzen 5 zu 6

Eine 1.0 M Lösung von **5** (100 mg, 0.28 mmol) in trockenen DMF und AIBN (1.32 mg, 0.014 mmol) wurde für 90 min mit Argon entgast. Die entgaste Lösung rührte für 16 Stunden bei 80 °C. Das Polymer wurde in Methanol gefällt. Dabei wurden 52 mg (0.15 mmol, 51.7%) **6** als weißer Feststoff erhalten.

### 2.3 E3: Synthese und Polymerisation von 1,4-Di-tert-butyl-2-methoxy-5-(ethenyloxy)-benzen 7

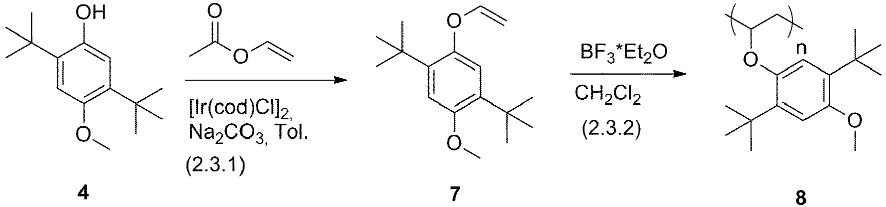

### 2.3.1 Synthese von 1,4-Di-tert-butyl-2-methoxy-5-(ethenyloxy)-benzen 7

2,5-Di-*tert*-butyl-4-methoxyphenol **4** (591 mg, 2.5 mmol), Na₂CO₃ (318 mg, 3 mmol) und [lr(cod)Cl]₂ (16.8 mg, 0.025 mmol) wurden in einem Schlenk sekuriert. Anschließend wurden trockenes Toluol (2.5 mL) und Vinylacetat (0.29 mL, 3.125 mmol) zugegeben. Die Lösung wurde 24 h unter Argon bei 90 °C gerührt. Die Reaktionslösung wurde durch Säulenchromatographie auf Silica mit Toluol als Laufmittel gereinigt. Es wurden 202 mg (31%) **7** als gelblicher Feststoff erhalten.
¹H NMR (CDCl₃, 300 MHz, ppm): δ 6.95 (s, 1H), 6.91 (s, 1H), 6.60 (dd, 1H), 4.72 (d, 1H), 4.38 (d, 1H), 3.91 (s, 3H), 1.46 (s, 9H), 1.44 (s, 9H).

### 2.3.2 Polymerisation von 1,4-Di-tert-butyl-2-methoxy-5-(ethenyloxy)-benzen 7 zu 8

1,4-Di-*tert*-butyl-2-methoxy-5-(ethenyloxy)-benzen **7** (65.6 mg, 0.25 mmol) wurden unter Argonatmosphäre in 0.125 mL trockenem Dichlormethan gelöst und auf -78 °C gekühlt. Anschließend wurden 5 mol% BF₃-Etherat (1.6 µL, 12.5 µmol) zugegeben. Die Reaktionsmischung wurde für 24 h gerührt und dabei langsam auf Raumtemperatur erwärmt. Die gelartige Lösung wurde mit 1 mL Dichlormethan verdünnt und in Methanol ausgefällt. Der Feststoff wurde durch Zentrifugation abgetrennt, mit Methanol gewaschen und im Vakuum getrocknet. Es wurden 38.8 mg (59% Ausbeute) **8** als weißes Pulver erhalten.

### 3. Vergleichsbeispiele

### 3.1 V1: Synthese und Polymerisation von ((2,5-Di-tert-butyl-1,4-phenylen)bis(oxy))bis(propan-3,1-diyl)-bis(2-methylacrylat) 12

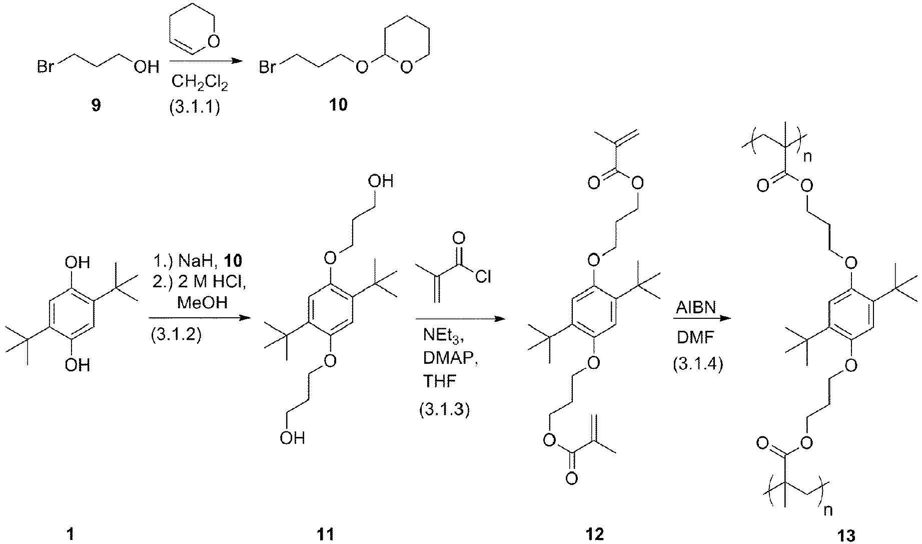

### 3.1.1 Synthese von 2-(3-Bromopropoxy)tetrahydro-2H-pyran 10

In eine 0.5 M Lösung von 1-Brom-3-hydroxypropan **9** (10 g, 72 mmol) in CH₂Cl₂ wurden *p*-Toluolsulfonsäurehydrat (1.37 g, 7.2 mmol) sowie Dihydropyran (9.8 mL, 107.9 mmol) gegeben und für 16 Stunden bei Raumtemperatur gerührt. Die Reaktion wurde mit Wasser extrahiert. Die organische Phase wurde mit MgSO₄ getrocknet, das Lösungsmittel im Vakuum entfernt und der Rückstand mittels Vakuumdestillation gereinigt. Es wurden 12.2 g (54.7 mmol, 76%) **10** als farbloses Öl erhalten.
¹H NMR (CDCl₃, 300 MHz, ppm): δ 4.52 (s, 1H), 3.78 (m, 2H), 3.46 (m, 4H), 2.05 (m, 2H), 1.68 (m, 2H), 1.46 (m, 4H).

### 3.1.2 Synthese von 3,3'-((2,5-Di-tert-butyl-1,4-phenylen)bis(oxy))bis(propan-1-ol) 11

Zu einer 0.9 M Lösung von **1** (1 g, 4.5 mmol) in THF wurde eine eisgekühlte Suspension von NaH (450 mg, 11.2 mmol, 60% Dispersion in Mineralöl) in 10 mL THF getropft und nach vollständiger Zugabe noch 2 Stunden bei Raumtemperatur gerührt. Anschließend wurde **10** (5.02 g, 22.5 mmol) zugegeben und die Reaktionsmischung für 24 Stunden bei 50 °C gerührt. Die Reaktion wurde mit Wasser gequencht und mit Dichlormethan extrahiert. Die organische Phase wurde mit MgSO₄ getrocknet und das Lösungsmittel im Vakuum entfernt. Ohne weitere Aufreinigung wurde der Rückstand in 50 mL Methanol aufgenommen und 20 mL 2 M HCl hinzugegeben. Nach Abspaltung der Schutzgruppe (DC-Kontrolle) wurde das Produkt mit Dichlormethan extrahiert, über MgSO₄ getrocknet und das Lösungsmittel im Vakuum entfernt. Der Rückstand wurde mittels Säulenchromatographie (Silicagel, Hexan/Ethylacetat, 1:1) gereinigt. Es wurden 853 mg (2.5 mmol, 56%) **11** als weißer Feststoff erhalten.
¹H NMR (CDCl₃, 300 MHz, ppm): δ 6.85 (s, 2H), 4.10 (t, 4H), 3.92 (t, 4H), 2.09 (m, 4H), 1.37 (s, 18H).

### 3.1.3 Synthese von ((2,5-Di-tert-butyl-1,4-phenylen)bis(oxy))bis(propan-3,1-diyl)-bis(2-methylacrylat) 12

**11** (505 mg, 1.5 mmol) und DMAP (18 mg, 0.15 mmol) wurden inertisiert. Es wurden 10 mL trockenes THF, Triethylamin (820 µL, 5.9 mmol) und Methacryloylchlorid (570 µl, 5.9 mmol) unter Kühlung zugegeben und für 16 Stunden bei Raumtemperatur gerührt. Die Reaktion wurde mit Wasser gequencht und mit Dichlormethan extrahiert. Die organische Phase wurde mit MgSO₄ getrocknet und das Lösungsmittel im Vakuum entfernt. Der Rückstand wurde mittels Säulenchromatographie (Silicagel, Hexan/Ethylacetat, 4:1) gereinigt. Es wurden 565 mg (1.2 mmol, 80.6%) **12** als weißer Feststoff erhalten.
¹H NMR (CDCl₃, 300 MHz, ppm): δ 6.83 (s, 2H), 6.12 (s, 2H), 5.56 (s, 2H), 4.39 (t, 4H), 4.07 (t, 4H), 2.21 (m, 4H), 1.95 (s, 6H), 1.37 (s, 18H).

### 3.1.4 Polymerisation von ((2,5-Di-tert-butyl-1,4-phenylen)bis(oxy))bis(propan-3,1-diyl)-bis(2-methylacrylat) 12 zu 13

Eine 0.5 M Lösung von **12** (100 mg, 0.210 mmol) in trockenem DMF und AIBN (1.72 mg, 0.011 mmol) wurden für 90 min mit Argon entgast. Die entgaste Lösung rührte für 16 Stunden bei 80 °C. Das Polymer wurde in Methanol gefällt und gewaschen. Dabei wurden 65 mg (0.178 mmol, 84.3 %) **13** als weißer Feststoff erhalten.

### 3.2 V2: Synthese und Polymerisation von 3-(2,5-Di-tert-butyl-4-methoxyphenoxy)propylmethacrylat 15

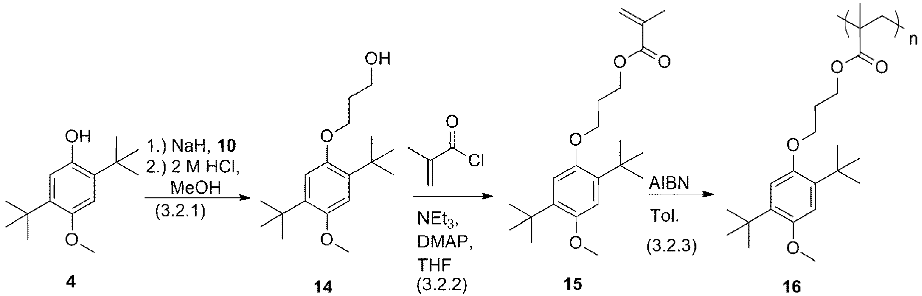

### 3.2.1 Synthese von 3-(2,5-Di-tert-butyl-4-methoxyphenoxy)propan-1-ol 14

Eine 0.8 M Lösung von **4** (2 g, 8.5 mmol) in THF wurde in eine eisgekühlte Suspension von NaH (507 mg, 12.7 mmol, 60% Dispersion in Mineralöl) in 10 mL THF getropft und nach vollständiger Zugabe noch 2 Stunden bei Raumtemperatur gerührt. Anschließend wurde **10** (5.66 g, 25.4 mmol) zugegeben und die Reaktionsmischung für 48 Stunden bei 50 °C gerührt. Die Reaktion wurde mit Wasser gequencht und mit Dichlormethan extrahiert. Die organische Phase wurde mit MgSO₄ getrocknet und das Lösungsmittel wurde im Vakuum entfernt. Der Rückstand wurde in 50 mL Methanol aufgenommen und 20 mL 2 M HCl hinzugegeben. Nach erfolgreicher Abspaltung der Schutzgruppe wurde das Produkt mit Dichlormethan extrahiert, über MgSO₄ getrocknet und das Lösungsmittel im Vakuum entfernt. Der Rückstand wurde mittels Gelfiltration (Silicagel, Hexan/Ethylacetat, 4:1) gereinigt. Es wurden 1.62 g (5.5 mmol, 65%) **14** als weißer Feststoff erhalten.
¹H NMR (CDCl₃, 300 MHz, ppm): δ 6.84 (2H), 4.11 (t, 2H), 3.92 (t, 2H), 3.81 (s, 3H), 2.09 (m, 2H), 1.37 (18H).

### 3.2.2 Synthese von 3-(2,5-Di-tert-butyl-4-methoxyphenoxy)propylmethacrylat 15

**14** (500 mg, 1.7 mmol) und DMAP (20.8 mg, 0.17 mmol) wurden inertisiert. Es wurden 10 mL trockenes THF, Triethylamin (940 µl, 6.8 mmol) und Methacryloylchlorid (660 µl, 6.8 mmol) unter Kühlung hinzugegeben und für 16 Stunden bei Raumtemperatur gerührt. Die Reaktion wurde mit Wasser gequencht und mit Dichlormethan extrahiert. Die organische Phase wurde mit MgSO₄ getrocknet und das Lösungsmittel im Vakuum entfernt. Der Rückstand wurde mittels Säulenchromatographie (Silicagel, Hexan/Ethylacetat, 4:1) gereinigt. Es wurden 545 mg (1.5 mmol, 88.5%) **15** als weißer Feststoff erhalten.
¹H NMR (CDCl₃, 300 MHz, ppm): δ 6.83 (2H), 6.12 (s, 1H), 5.56 (s, 1H), 4.39 (t, 2H), 4.07 (t, 2H), 3.80 (s, 3H), 2.21 (m, 2H), 1.95 (s, 3H), 1.36 (18H).

### 3.2.3 Polymerisation von 3-(2,5-Di-tert-butyl-4-methoxyphenoxy)propylmethacrylat 15 zu 16

Eine 0.5 M Lösung von **15** (100 mg, 0.275 mmol) in trockenem Toluol und AIBN (1.72 mg, 0.13 mmol) wurde für 90 min mit Argon entgast. Die entgaste Lösung rührte für 16 Stunden bei 80 °C. Das Polymer wurde in Methanol ausgefällt. Dabei wurden 65 mg (0.18 mmol, 64.5%) **16** als weißer Feststoff erhalten.

### 4. Herstellung der Elektroden

### 4.1 Herstellung einer Elektrode mit 6 (erfindungsgemäßes Beispiel)

**6** (hergestellt wie in Abschnitt 2.2.2 beschrieben) wurde im Mörser zu einem feinen Pulver verarbeitet. Anschließend wurde zu 5 mg **6** und 5 mg Poly(vinylidenfluorid) (PVDF; Sigma Aldrich als Bindeadditiv) 0.5 mL NMP (*N*-Methyl-2-pyrrolidon) gegeben und für 4 h gerührt. Diese Lösung wurde zu 40 mg Super P® (Kohlenstoffpartikel von Sigma-Aldrich, als Leitadditiv) gegeben und es wurde in einem Mörser zehn Minuten durchmischt, bis eine homogene Paste entstand. Diese wurde auf eine Aluminiumfolie (15 µm, MIT Corporation) aufgebracht. Die entstandene Elektrode wurde für 16 Stunden bei 45 °C im Vakuum getrocknet. Der Anteil des aktiven Materials auf den Elektroden wurde auf Basis der Massen von getrockneten Elektroden bestimmt. Die Konstruktion der Knopfzellen (Typ 2032) erfolgte unter Argonatmosphäre. Mit Hilfe eines MIT Corporation Precision Disc Cutter wurden geeignete Elektroden ausgestanzt (15 mm Durchmesser). Die als Kathode zum Einsatz kommende Elektrode wurde auf den Boden der Knopfzelle platziert und mit Hilfe einer porösen Polypropylen Membran (Celgard, MIT Corporation) von der Lithiumanode getrennt. Auf der Lithium Anode wurden anschließend ein rostfreies Stahlgewicht (Durchmesser: 15.5 mm, Dicke: 0.3 mm, MIT Corporation) und eine rostfreie Stahlfeder (Durchmesser: 14.5 mm, Dicke: 5 mm) platziert. Die Knopfzelle wurde mit Elektrolyt (EC/DMC 3/7, 0.5 M LiClO₄) gefüllt und mit dem Deckel abgedichtet bevor sie mit einer elektrischen Pressmaschine (MIT Corporation MSK-100D) versiegelt wurde.

Im ersten Entladezyklus zeigte die Batterie eine Kapazität von 67 mAh/g (88% der theoretisch möglichen Kapazität), nach 10 Lade/Entladezyklen (Ladegeschwindigkeit 1 C) zeigt die Batterie eine Kapazität von 50 mAh/g (Abbildung 3 = Fig 3).

### 4.2 Herstellung einer Elektrode mit 13 (Vergleichsbeispiel)

**13** (hergestellt wie in Abschnitt 3.1.4 beschrieben) wurde im Mörser zu einem feinen Pulver verarbeitet. Anschließend wurde zu 15 mg **13** und 5 mg Poly(vinylidenfluorid) (PVDF; Sigma Aldrich als Bindeadditiv) 0.5 mL NMP (*N*-Methyl-2-pyrrolidon) gegeben und für 4 h gerührt. Diese Lösung wurde zu 30 mg Super P® (Sigma-Aldrich, als Leitadditiv) gegeben und es wurde in einem Mörser zehn Minuten durchmischt, bis eine homogene Paste entstand. Diese wurde auf eine Aluminiumfolie (15 µm, MIT Corporation) aufgebracht. Die entstandene Elektrode wurde für 16 Stunden bei 45 °C im Vakuum getrocknet. Der Anteil des aktiven Materials auf den Elektroden wurde auf Basis der Massen von getrockneten Elektroden bestimmt. Die Konstruktion der Knopfzellen (Typ 2032) erfolgte unter Argonatmosphäre. Mit Hilfe eines MIT Corporation Precision Disc Cutter wurden geeignete Elektroden ausgestanzt (15 mm Durchmesser). Die als Kathode zum Einsatz kommende Elektrode wurde auf den Boden der Knopfzelle platziert und mit Hilfe einer porösen Polypropylen Membran (Celgard, MIT Corporation) von der Lithiumanode getrennt. Auf der Lithium Anode wurden anschließend ein rostfreies Stahlgewicht (Durchmesser: 15.5 mm, Dicke: 0.3 mm, MIT Corporation) und eine rostfreie Stahlfeder (Durchmesser: 14.5 mm, Dicke: 5 mm) platziert. Die Knopfzelle wurde mit Elektrolyt (EC/DMC 3/7, 0.5 M LiClO₄) gefüllt und mit dem Deckel abgedichtet bevor sie mit einer elektrischen Pressmaschine (MIT Corporation MSK-100D) versiegelt wurde.

Im ersten Entladezyklus zeigte die Batterie eine Kapazität von 34 mAh/g (60% der theoretisch möglichen Kapazität), nach 10 Lade/Entladezyklen (Ladegeschwindigkeit 1 C) zeigt die Batterie eine Kapazität von 24 mAh/g (Abbildung 4 = Fig. 4).

### 4.3 Herstellung einer Elektrode mit 16 (Vergleichsbeispiel

**16** (hergestellt wie in Abschnitt 3.2.3 beschrieben) wurde im Mörser zu einem feinen Pulver verarbeitet. Anschließend wurde zu 5 mg **16** und 5 mg Poly(vinylidenfluorid) (PVDF; Sigma Aldrich als Bindeadditiv) 0.5 mL NMP (*N*-Methyl-2-pyrrolidon) gegeben und für 4 h gerührt. Diese Lösung wurde zu 40 mg Super P® (Sigma-Aldrich, als Leitadditiv) gegeben und es wurde in einem Mörser zehn Minuten durchmischt, bis eine homogene Paste entstand. Diese wurde auf eine Aluminiumfolie (15 µm, MIT Corporation) aufgebracht. Die entstandene Elektrode wurde für 16 Stunden bei 45 °C im Vakuum getrocknet. Der Anteil des aktiven Materials auf den Elektroden wurde auf Basis der Massen von getrockneten Elektroden bestimmt. Die Konstruktion der Knopfzellen (Typ 2032) erfolgte unter Argonatmosphäre. Mit Hilfe eines MIT Corporation Precision Disc Cutter wurden geeignete Elektroden ausgestanzt (15 mm Durchmesser). Die als Kathode zum Einsatz kommende Elektrode wurde auf den Boden der Knopfzelle platziert und mit Hilfe einer porösen Polypropylen Membran (Celgard, MIT Corporation) von der Lithiumanode getrennt. Auf der Lithium Anode wurden anschließend ein rostfreies Stahlgewicht (Durchmesser: 15.5 mm, Dicke: 0.3 mm, MIT Corporation) und eine rostfreie Stahlfeder (Durchmesser: 14.5 mm, Dicke: 5 mm) platziert. Die Knopfzelle wurde mit Elektrolyt (EC/DMC 3/7, 0.5 M LiClO₄) gefüllt und mit dem Deckel abgedichtet bevor sie mit einer elektrischen Pressmaschine (MIT Corporation MSK-100D) versiegelt wurde.

Im ersten Entladezyklus zeigte die Batterie eine Kapazität von 55 mAh/g (81% der theoretisch möglichen Kapazität), nach 10 Lade/Entladezyklen (Geschwindigkeit 1 C) zeigt die Batterie eine Kapazität von 41 mAh/g (Abbildung 5 = Fig. 5).

### 5. Ergebnisse

Die Batterien welche mit Elektroden aus erfindungsgemäßen Polymeren (Abschnitt 4.1, Abbildung 3) erhalten wurden, zeigen eine Entladekapazität nach dem ersten Lade-/ Entladezyklus von 67 mAh/g und nach 10 Entladezyklen eine Entladekapazität von 50 mAh/g. Dies ist deutlich höher als die Entladekapazität, die mit Batterien aus Elektroden aus Polymeren des Standes der Technik erreicht werden, nämlich 34 mAh/g nach dem 1. Lade/- Entladezyklus und 24 mAh/g nach dem 10 Lade-/ Entladezyklus mit einer Batterie gemäß Abschnitt 4.2 und 55 mAh/g nach dem 1. Lade/- Entladezyklus und 41 mAh/g nach dem 10 Lade-/ Entladezyklus mit einer Batterie gemäß Abschnitt 4.3 . Das erfindungsgemäße Polymer ermöglicht deshalb Batterien mit sowohl höherer Entladespannung, als auch höherer Entladekapazität, und dies auch nach mehreren Lade-/ Entladezyklen. Weiterhin konnten die erfindungsgemäßen Polymere deutlich aufwandgeringer hergestellt werden.

## Patentansprüche

1. Polymer umfassend n¹ miteinander verknüpfte Wiederholungseinheiten der chemischen Struktur **(I)** oder n² miteinander verknüpfte Wiederholungseinheiten der chemischen Struktur **(II)** mit 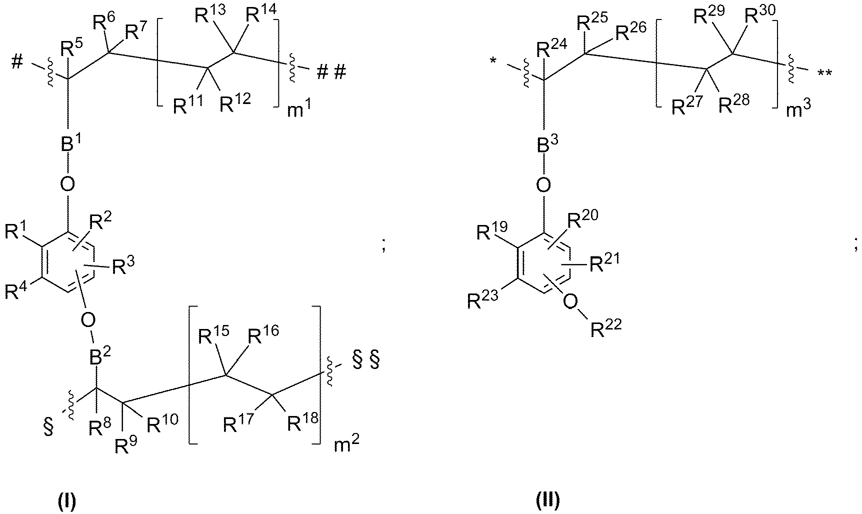 wobei n¹ und n² unabhängig voneinander jeweils eine ganze Zahl ≥ 4 und ≤ 5000 sind,
wobei m¹, m², m³ unabhängig voneinander jeweils eine ganze Zahl ≥ 0 und ≤ 5000 sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch "#" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R¹, R², R³, R⁴ R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²³, R²⁴, R²⁵, R²⁶, R²⁷, R²⁸, R²⁹, R³⁰ unabhängig voneinander jeweils aus der Gruppe bestehend aus
Wasserstoff, Alkylgruppe mit 1 bis 30 Kohlenstoffatomen,
ausgewählt sind,
und wobei R²² eine Alkylgruppe mit 1 bis 30 Kohlenstoffatomen ist,
und wobei die Reste R¹¹, R¹³, R¹⁵, R¹⁷ unabhängig voneinander jeweils auch eine Gruppe der allgemeinen Struktur **(III)** mit 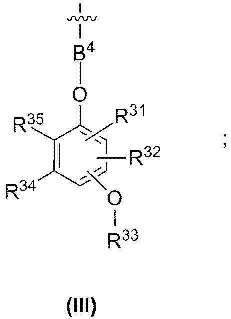 wobei die Reste R³¹, R³², R³⁴, R³⁵ unabhängig voneinander jeweils aus der Gruppe bestehend aus Wasserstoff, Alkylgruppe mit 1 bis 30 Kohlenstoffatomen ausgewählt sind,
und wobei R³³ eine Alkylgruppe mit 1 bis 30 Kohlenstoffatomen ist,
sein können,
und wobei R⁵, R⁶, R⁷, R⁸, R⁹, R¹⁰, R¹¹, R¹², R¹³, R¹⁴, R¹⁵, R¹⁶, R¹⁷, R¹⁸, R²⁴, R²⁵, R²⁶, R²⁷, R²⁸, R²⁹, R³⁰ jeweils auch aus der Gruppe bestehend aus
Nitrogruppe, -CN, -F, -Cl, -Br, -I, -O-R⁴⁰, wobei R⁴⁰ eine Alkylgruppe mit 1 bis 30 Kohlenstoffatomen ist,
ausgewählt sein können,
und wobei B¹, B², B³, B⁴ unabhängig voneinander jeweils aus der Gruppe bestehend aus
direkte Bindung,
&-(CH₂)ₚ₁-&&, wobei p1 eine ganze Zahl von 1 bis 4 ist, und wobei mindestens eine -CH₂- Gruppe auch durch -C(=O)- ersetzt sein kann,
&-(CH₂)ᵣ₁- B⁵-(CH₂)ᵣ₂-&&, wobei B⁵ ein (hetero)aromatischer zweiwertiger 6-Ring, 3-Ring oder 5-Ring ist und r1, r2 jeweils 0 oder 1, wobei r1 + r2 ≤ 1 ist, ist,
&-(CH₂)_{q1}-B⁶-(CH₂)_{q2}-&& mit B⁶ = O, S, NH; q1 = 0, 1,2 und q2 = 1, 2, 3 wobei q1 + q2 ≤ 3 und wobei eine -CH₂- Gruppe auch durch -C(=O)- ersetzt sein kann,
&-O-C(=O)-NH-CH₂-&&; ausgewählt sind,
und wobei "&&" für B¹ die zum Sauerstoff weisende Bindung bezeichnet, für B² die zum Sauerstoff weisende Bindung bezeichnet, für B³ die zum Sauerstoff weisende Bindung bezeichnet, für B⁴ zum Sauerstoff weisende Bindung bezeichnet, und wobei "&" für B¹ die zu R⁵ weisende Bindung bezeichnet, für B² die zu R⁸ weisende Bindung bezeichnet, für B³ die zu R²⁴ weisende Bindung bezeichnet, für B⁴ die zu R¹² bzw. R¹⁴ bzw. R¹⁶ bzw. R¹⁸ weisende Bindung bezeichnet.

2. Polymer nach Anspruch 1, umfassend n¹ miteinander verknüpfte Wiederholungseinheiten der chemischen Struktur **(I)** oder n² miteinander verknüpfte Wiederholungseinheiten der chemischen Struktur **(II)** mit 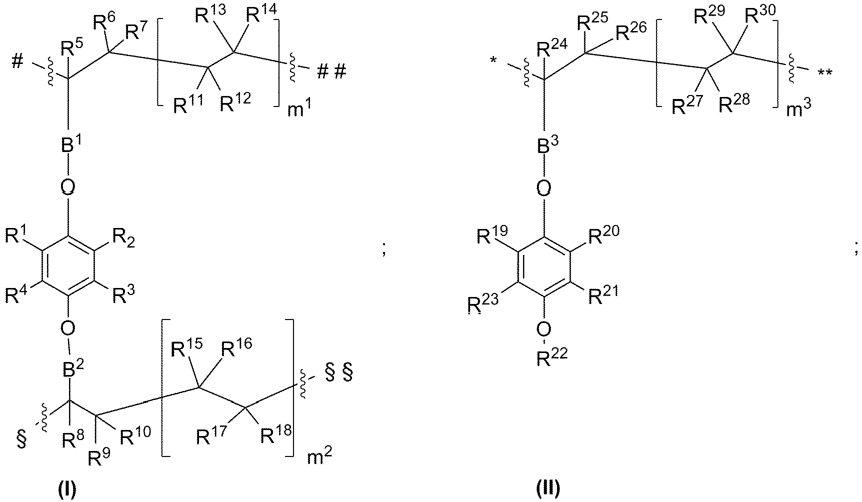 wobei n¹ und n² unabhängig voneinander jeweils eine ganze Zahl ≥ 10 und ≤ 1000, sind,
wobei m¹, m², m³ unabhängig voneinander jeweils eine ganze Zahl ≥ 0 und ≤ 1000, sind,
wobei die Wiederholungseinheiten der chemischen Struktur **(I)** innerhalb des Polymers gleich oder zumindest teilweise voneinander verschieden sind,
wobei die Wiederholungseinheiten der chemischen Struktur **(II)** innerhalb des Polymers gleich oder zumindest teilweise voneinander verschieden sind,
wobei die Wiederholungseinheiten der chemischen Struktur **(I)** innerhalb des Polymers so miteinander verknüpft sind, dass die durch "# #" gekennzeichnete Bindung einer bestimmten Wiederholungseinheit mit der durch #" gekennzeichneten Bindung der benachbarten Wiederholungseinheit verknüpft ist und die durch "§ §" gekennzeichnete Bindung einer bestimmten Wiederholungseinheit mit der durch "§" gekennzeichneten Bindung der benachbarten Wiederholungseinheit verknüpft ist,
wobei die Wiederholungseinheiten der chemischen Struktur **(II)** innerhalb des Polymers so miteinander verknüpft sind, dass die durch "*" gekennzeichnete Bindung einer bestimmten Wiederholungseinheit mit der durch "**" gekennzeichneten Bindung der benachbarten Wiederholungseinheit verknüpft ist,
wobei die Reste R¹, R², R³, R⁴ R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²³, R²⁴, R²⁵, R²⁶, R²⁷, R²⁸, R²⁹, R³⁰ unabhängig voneinander jeweils aus der Gruppe bestehend aus Wasserstoff, Alkylgruppe mit 1 bis 8 Kohlenstoffatomen ausgewählt sind,
und wobei R²² eine Alkylgruppe mit 1 bis 8 Kohlenstoffatomen ist,
und wobei die Reste R¹¹, R¹³, R¹⁵, R¹⁷ unabhängig voneinander jeweils auch eine Gruppe der allgemeinen Struktur **(III)** mit 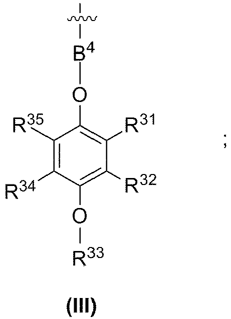 wobei die Reste R³¹, R³², R³⁴, R³⁵ unabhängig voneinander jeweils aus der Gruppe bestehend aus Wasserstoff, Alkylgruppe mit 1 bis 8 Kohlenstoffatomen ausgewählt sind,
und wobei R³³ eine Alkylgruppe mit 1 bis 8 Kohlenstoffatomen ist,
sein können,
und wobei R⁵, R⁶, R⁷, R⁸, R⁹, R¹⁰, R¹¹, R¹², R¹³, R¹⁴, R¹⁵, R¹⁶, R¹⁷, R¹⁸, R²⁴, R²⁵, R²⁶, R²⁷, R²⁸, R²⁹, R³⁰ jeweils auch aus der Gruppe bestehend aus
Nitrogruppe, -CN, -F, -Cl, -Br, -I, -O-R⁴⁰, wobei R⁴⁰ eine Alkylgruppe mit 1 bis 8 Kohlenstoffatomen ist,
ausgewählt sein können,
und wobei B¹, B², B³, B⁴ unabhängig voneinander jeweils aus der Gruppe bestehend aus direkte Bindung,
&-(CH₂)ₚ₁-&&, wobei p1 eine ganze Zahl von 1 bis 3 ist,
&- B⁵-CH₂-&&, wobei B⁵ = Phenylen ist
&-(CH₂)_{q1}-B⁶-(CH₂)_{q2}-&& mit B⁶ = O, S; q1 = 0, 1,2 und q2 = 1, 2, 3 wobei q1 + q2 ≤ 3, &-O-C(=O)-NH-CH₂ -&&; ausgewählt sind.

3. Polymer nach Anspruch 2,
wobei R¹ = R³, R² = R⁴, R¹⁹ = R²¹, R²⁰ = R²³, R³¹ = R³⁴, R³² = R³⁵.

4. Polymer nach Anspruch 3, wobei R¹ = R³ = H, R² = R⁴ = Alkylgruppe mit 1 bis 8 Kohlenstoffatomen, R¹⁹ = R²¹ = H, R²⁰ = R²³= Alkylgruppe mit 1 bis 8 Kohlenstoffatomen, R³¹ = R³⁴ = H, R³² = R³⁵ = Alkylgruppe mit 1 bis 8 Kohlenstoffatomen und B¹, B², B³, B⁴ unabhängig voneinander jeweils aus der Gruppe bestehend aus direkte Bindung, Methylen, Ethylen, n-Propylen, &- B⁵-CH₂-&&, wobei B⁵ = 1,4-Phenylen ist, ausgewählt sind.

5. Polymer nach Anspruch 4, wobei R¹ = R³ = H, R² = R⁴ = Alkylgruppe mit 1 bis 6 Kohlenstoffatomen, R¹⁹ = R²¹ = H, R²⁰ = R²³= Alkylgruppe mit 1 bis 6 Kohlenstoffatomen, R³¹ = R³⁴ = H, R³² = R³⁵= Alkylgruppe mit 1 bis 6 Kohlenstoffatomen.

6. Polymer nach Anspruch 5, wobei R¹ = R³ = H, R² = R⁴ = *tert*-Butylgruppe, R¹⁹ = R²¹ = H, R²⁰ = R²³= *tert*-Butylgruppe, R³¹ = R³⁴ = H, R³² = R³⁵= *tert*-Butylgruppe.

7. Verwendung der Polymere nach einem der Ansprüche 1 bis 6 als redoxaktives Elektrodenmaterial für elektrische Ladungsspeicher.

8. Verwendung der Polymere nach einem der Ansprüche 1 bis 6 in einem Elektrodenslurry für elektrische Ladungsspeicher.

## Claims

1. Polymer comprising n¹ mutually linked repeat units of the chemical structure **(I)** or n² mutually linked repeat units of the chemical structure **(II)** with 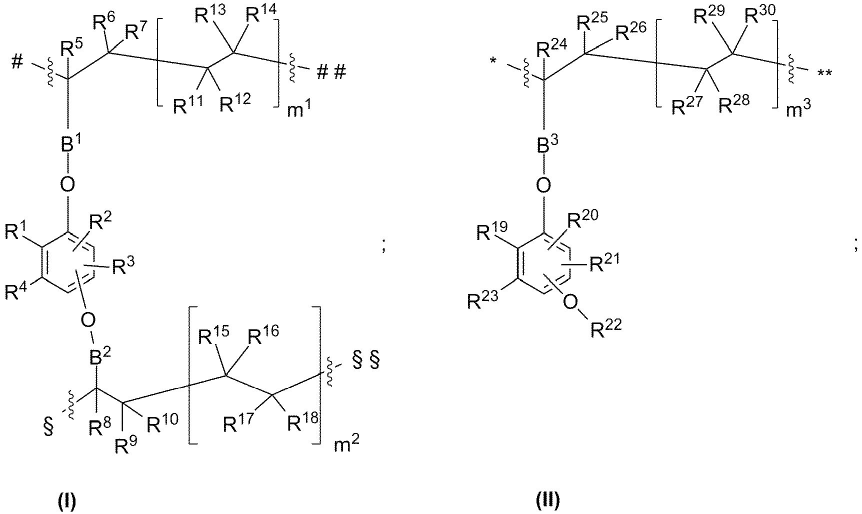 where n¹ and n² are each independently an integer ≥ 4 and ≤ 5000,
where m¹, m², m³ are each independently an integer ≥ 0 and ≤ 5000,
where the repeat units of the chemical structure **(I)** within the polymer are the same or at least partly different from one another,
where the repeat units of the chemical structure **(II)** within the polymer are the same or at least partly different from one another,
where the repeat units of the chemical structure **(I)** within the polymer are joined to one another in such a way that the bond identified by "# #" in a particular repeat unit is joined by the bond identified by "#" in the adjacent repeat unit and the bond identified by "§ §" in a particular repeat unit is joined by the bond identified by "§" in the adjacent repeat unit,
where the repeat units of the chemical structure **(II)** within the polymer are joined to one another in such a way that the bond identified by "*" in a particular repeat unit is joined by the bond identified by "**" in the adjacent repeat unit,
where the R¹, R², R³, R⁴ R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²³, R²⁴, R²⁵, R²⁶, R²⁷, R²⁸, R²⁹, R³⁰ radicals are each independently selected from the group consisting of
hydrogen, alkyl group having 1 to 30 carbon atoms,
and where R²² is an alkyl group having 1 to 30 carbon atoms,
and where the R¹¹, R¹³, R¹⁵, R¹⁷ radicals may each independently also be a group of the general structure **(III)** with 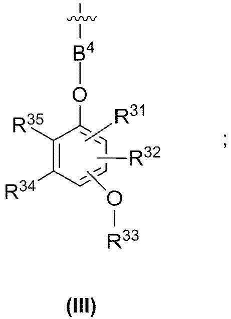 where the R³¹, R³², R³⁴, R³⁵ radicals are each independently selected from the group consisting of hydrogen, alkyl group having 1 to 30 carbon atoms, and where R³³ is an alkyl group having 1 to 30 carbon atoms,
and where R⁵, R⁶, R⁷, R⁸, R⁹, R¹⁰, R¹¹, R¹², R¹³, R¹⁴, R¹⁵, R¹⁶, R¹⁷, R¹⁸, R²⁴, R²⁵, R²⁶, R²⁷, R²⁸, R²⁹, R³⁰ may each also be selected from the group consisting of
nitro group, -CN, -F, -Cl, -Br, -I, -O-R⁴⁰ where R⁴⁰ is an alkyl group having 1 to 30 carbon atoms,
and where B¹, B², B³, B⁴ are each independently selected from the group consisting of
direct bond,
&-(CH₂)ₚ₁-&& where p1 is an integer from 1 to 4, and where at least one -CH₂- group may also be replaced by - C(=O)-,
&-(CH₂)ᵣ₁- B⁵-(CH₂)ᵣ₂-&& where B⁵ is a (hetero) aromatic divalent 6-membered ring, 3-membered ring or 5-membered ring and r1, r2 are each 0 or 1, where r1 + r2 ≤ 1,
&- (CH₂)_{q1}-B⁶-(CH₂)_{q2}-&& with B⁶ = O, S, NH; q1 = 0, 1, 2 and q2 = 1, 2, 3 where q1 + q2 ≤ 3 and where one -CH₂-group may also be replaced by -C(=O)-, &-O-C(=O)-NH-CH₂-&&;
and where "&&" for B¹ denotes the bond pointing toward the oxygen, for B² the bond pointing toward the oxygen, for B³ the bond pointing toward the oxygen, and for B⁴ the bond pointing toward the oxygen,
and where "&" for B¹ denotes the bond pointing toward R⁵, for B² the bond pointing toward R⁸, for B³ the bond pointing toward R²⁴, and for B⁴ the bond pointing toward R¹² or R¹⁴ or R¹⁶ or R¹⁸.

2. Polymer according to Claim 1 comprising n¹ mutually linked repeat units of the chemical structure **(I)** or n² mutually linked repeat units of the chemical structure **(II)** with 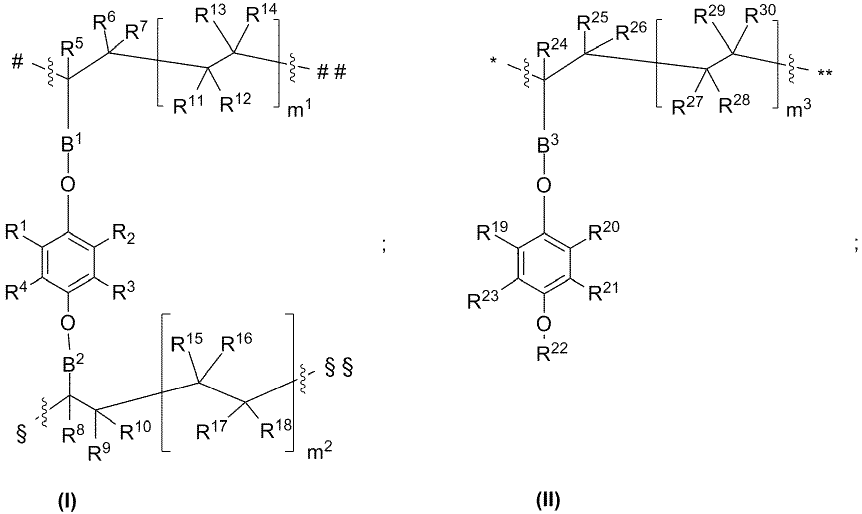 where n¹ and n² are each independently an integer ≥ 10 and ≤ 1000,
where m¹, m², m³ are each independently an integer ≥ 0 and ≤ 1000,
where the repeat units of the chemical structure **(I)** within the polymer are the same or at least partly different from one another,
where the repeat units of the chemical structure **(II)** within the polymer are the same or at least partly different from one another,
where the repeat units of the chemical structure **(I)** within the polymer are joined to one another in such a way that the bond identified by "# #" in a particular repeat unit is joined by the bond identified by "#" in the adjacent repeat unit and the bond identified by "§ §" in a particular repeat unit is joined by the bond identified by "§" in the adjacent repeat unit,
where the repeat units of the chemical structure **(II)** within the polymer are joined to one another in such a way that the bond identified by "*" in a particular repeat unit is joined by the bond identified by "**" in the adjacent repeat unit,
where the R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²³, R²⁴, R²⁵, R²⁶, R²⁷, R²⁸, R²⁹, R³⁰ radicals are each independently selected from the group consisting of hydrogen, alkyl group having 1 to 8 carbon atoms,
and where R²² is an alkyl group having 1 to 8 carbon atoms,
and where the R¹¹, R¹³, R¹⁵, R¹⁷ radicals may each independently also be a group of the general structure **(III)** with 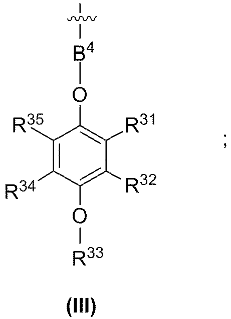 where the R³¹, R³², R³⁴, R³⁵ radicals are each independently selected from the group consisting of hydrogen, alkyl group having 1 to 8 carbon atoms,
and where R³³ is an alkyl group having 1 to 8 carbon atoms,
and where R⁵, R⁶, R⁷, R⁸, R⁹, R¹⁰, R¹¹, R¹², R¹³, R¹⁴, R¹⁵, R¹⁶, R¹⁷, R¹⁸, R²⁴, R²⁵, R²⁶, R²⁷, R²⁸, R²⁹, R³⁰ may each also be selected from the group consisting of
nitro group, -CN, -F, -Cl, -Br, -I, -O-R⁴⁰ where R⁴⁰ is an alkyl group having 1 to 8 carbon atoms,
and where B¹, B², B³, B⁴ are each independently selected from the group consisting of
direct bond,
&-(CH₂)ₚ₁-&& where p1 is an integer from 1 to 3,
&-B⁵-CH₂-&& where B⁵ = phenylene,
&-(CH₂)_{q1}-B⁶⁻(CH₂)_{q2}-&& with B⁶ = O, S; q1 = 0, 1, 2 and q2 = 1, 2, 3 where q1 + q2 ≤ 3,
&-O-C(=O)-NH-CH₂ -&&.

3. Polymer according to Claim 2,
where R¹ = R³, R² = R⁴ R¹⁹ = R²¹, R²⁰ = R²³, R³¹ = R³⁴, R³² = R³⁵.

4. Polymer according to Claim 3, where R¹ = R³ = H, R² = R⁴ = alkyl group having 1 to 8 carbon atoms, R¹⁹ = R²¹ = H, R²⁰ = R²³= alkyl group having 1 to 8 carbon atoms, R³¹ = R³⁴ = H, R³² = R³⁵ = alkyl group having 1 to 8 carbon atoms and B¹, B², B³, B⁴ are each independently selected from the group consisting of direct bond, methylene, ethylene, n-propylene, &-B⁵-CH₂-&& where B⁵ = 1,4-phenylene.

5. Polymer according to Claim 4, where R¹ = R³ = H, R² = R⁴ = alkyl group having 1 to 6 carbon atoms, R¹⁹ = R²¹ = H, R²⁰ = R²³ = alkyl group having 1 to 6 carbon atoms, R³¹ = R³⁴ = H, R³² = R³⁵ = alkyl group having 1 to 6 carbon atoms.

6. Polymer according to Claim 5, where R¹ = R³ = H, R² = R⁴ = tert-butyl group, R¹⁹ = R²¹ = H, R²⁰ = R²³= tert-butyl group, R³¹ = R³⁴ = H, R³² = R³⁵ = tert-butyl group.

7. Use of the polymers according to any of Claims 1 to 6 as redox-active electrode material for electrical charge storage means.

8. Use of the polymers according to any of Claims 1 to 6 in an electrode slurry for electrical charge storage means.

## Revendications

1. Polymère comprenant n¹ unités de répétition reliées les unes aux autres de la structure chimique (I) ou n² unités de répétition reliées les unes aux autres de la structure chimique (II) 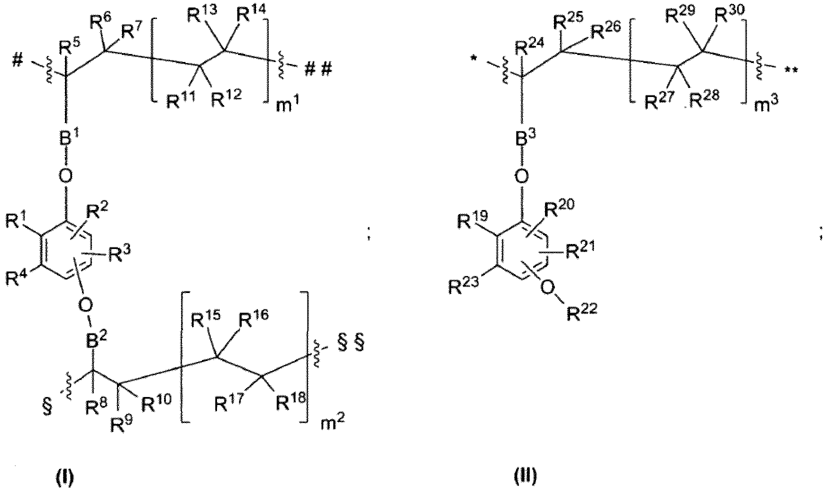 dans lesquelles n¹ et n² sont chacun indépendamment l'un de l'autre un nombre entier ≥ 4 et ≤ 5 000,
dans lesquelles m¹, m², m³ sont chacun indépendamment les uns des autres un nombre entier ≥ 0 et ≤ 5 000,
les unités de répétition de la structure chimique (I) étant identiques ou au moins partiellement différentes les unes des autres dans le polymère,
les unités de répétition de la structure chimique (II) étant identiques ou au moins partiellement différentes les unes des autres dans le polymère,
les unités de répétition de la structure chimique (I) étant reliées les unes aux autres dans le polymère de telle sorte que la liaison **caractérisé par** « ## » d'une unité de répétition déterminée soit reliée avec la liaison **caractérisée par** « # » de l'unité de répétition voisine, et la liaison **caractérisée par** « §§ » d'une unité de répétition déterminée soit reliée avec la liaison **caractérisée par** « § » de l'unité de répétition voisine,
les unités de répétition de la structure chimique (II) étant reliées les unes aux autres dans le polymère de telle sorte que la liaison **caractérisée par** « * » d'une unité de répétition déterminée soit reliée avec la liaison **caractérisée par** « ** » de l'unité de répétition voisine,
les radicaux R¹ R², R³, R⁴ R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²³, R²⁴, R²⁵, R²⁶, R²⁷, R²⁸, R²⁹, R³⁰ étant chacun choisis indépendamment les uns des autres dans le groupe constitué par :
l'hydrogène, un groupe alkyle de 1 à 30 atomes de carbone,
et R²² étant un groupe alkyle de 1 à 30 atomes de carbone, et les radicaux R¹¹, R¹³, R¹⁵, R¹⁷ pouvant chacun indépendamment les uns des autres également être un groupe de structure générale (III) : 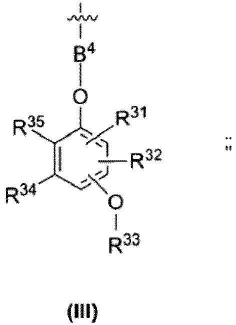
dans laquelle les radicaux R³¹, R³², R³⁴, R³⁵ sont chacun choisis indépendamment les uns des autres dans le groupe constitué par l'hydrogène, un groupe alkyle de 1 à 30 atomes de carbone,
et R³³ est un groupe alkyle de 1 à 30 atomes de carbone, et R⁵, R⁶, R⁷, R⁸, R⁹, R¹⁰, R¹¹, R¹², R¹³, R¹⁴, R¹⁵, R¹⁶, R¹⁷, R¹⁸, R²⁴, R²⁵, R²⁶, R²⁷, R²⁸, R²⁹, R³⁰ pouvant chacun également être choisis dans le groupe constitué par :
un groupe nitro, -CN, -F, -Cl, -Br, -I, -O-R⁴⁰, R⁴⁰ étant un groupe alkyle de 1 à 30 atomes de carbone,
et
B¹, B², B³, B⁴ étant chacun indépendamment les uns des autres choisis dans le groupe constitué par :
une liaison directe,
&-(CH₂)ₚ₁-&&, p1 étant un nombre entier de 1 à 4, et au moins un groupe -CH₂- pouvant également être remplacé par -C(=O)-,
&-(CH₂)ᵣ₁-B⁵-(CH₂)ᵣ₂-&&, B⁵ étant un cycle à 6 chaînons, un cycle à 3 chaînons ou un cycle à 5 chaînons bivalent (hétéro)aromatique, et r1, r2 représentant chacun 0 ou 1, avec r1 + r2 ≤ 1,
&-(CH₂)_{q1}-B⁶⁻(CH₂)_{q2}-&&, avec B⁶ = O, S, NH ; q1 = 0, 1, 2 et q2 = 1, 2, 3, avec q1 + q2 ≤ 3, et un groupe -CH₂-pouvant également être remplacé par -C(=O)-, &-O-C(=O)-NH-CH₂-&& ;
et « && » désignant pour B¹ la liaison vers l'oxygène, désignant pour B² la liaison vers l'oxygène, désignant pour B³ la liaison vers l'oxygène, désignant pour B⁴ la liaison vers l'oxygène, et « & » désignant pour B¹ la liaison vers R⁵, désignant pour B² la liaison vers R⁸, désignant pour B³ la liaison vers R²⁴, désignant pour B⁴ la liaison vers R¹² ou R¹⁴ ou R¹⁶ ou R¹⁸.

2. Polymère selon la revendication 1, comprenant n¹ unités de répétition reliées les unes aux autres de la structure chimique (I) ou n² unités de répétition reliées les unes aux autres de la structure chimique (II) : 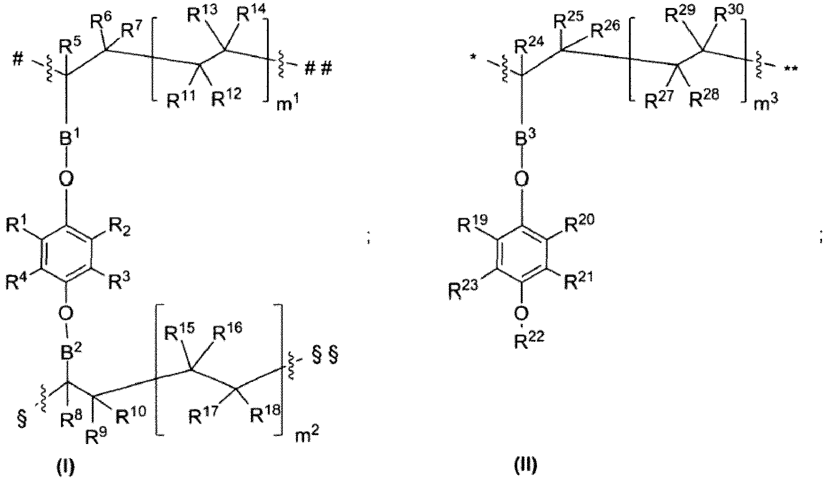 dans lesquelles n¹ et n² sont chacun indépendamment l'un de l'autre un nombre entier ≥ 10 et ≤ 1 000,
dans lesquelles m¹, m², m³ sont chacun indépendamment les uns des autres un nombre entier ≥ 0 et ≤ 1 000,
les unités de répétition de la structure chimique (I) étant identiques ou au moins partiellement différentes les unes des autres dans le polymère,
les unités de répétition de la structure chimique (II) étant identiques ou au moins partiellement différentes les unes des autres dans le polymère,
les unités de répétition de la structure chimique (I) étant reliées les unes aux autres dans le polymère de telle sorte que la liaison **caractérisé par** « ## » d'une unité de répétition déterminée soit reliée avec la liaison **caractérisée par** « # » de l'unité de répétition voisine, et la liaison **caractérisée par** « §§ » d'une unité de répétition déterminée soit reliée avec la liaison **caractérisée par** « § » de l'unité de répétition voisine,
les unités de répétition de la structure chimique (II) étant reliées les unes aux autres dans le polymère de telle sorte que la liaison **caractérisée par** « * » d'une unité de répétition déterminée soit reliée avec la liaison **caractérisée par** « ** » de l'unité de répétition voisine,
les radicaux R¹, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹, R²³, R²⁴, R²⁵, R²⁶, R²⁷, R²⁸, R²⁹, R³⁰ étant chacun choisis indépendamment les uns des autres dans le groupe constitué par :
l'hydrogène, un groupe alkyle de 1 à 8 atomes de carbone, et R²² étant un groupe alkyle de 1 à 8 atomes de carbone, et les radicaux R¹¹, R¹³, R¹⁵, R¹⁷ pouvant chacun indépendamment les uns des autres également être un groupe de structure générale (III) 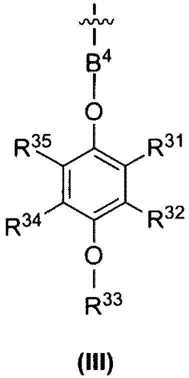
dans laquelle les radicaux R³¹, R³², R³⁴, R³⁵ sont chacun choisis indépendamment les uns des autres dans le groupe constitué par l'hydrogène, un groupe alkyle de 1 à 8 atomes de carbone,
et R³³ est un groupe alkyle de 1 à 8 atomes de carbone, et R⁵, R⁶, R⁷, R⁸, R⁹, R¹⁰, R¹¹, R¹², R¹³, R¹⁴, R¹⁵, R¹⁶, R¹⁷, R¹⁸, R²⁴, R²⁵, R²⁶, R²⁷, R²⁸, R²⁹, R³⁰ pouvant chacun également être choisis dans le groupe constitué par :
un groupe nitro, -CN, -F, -Cl, -Br, -I, -O-R⁴⁰, R⁴⁰ étant un groupe alkyle de 1 à 8 atomes de carbone,
et
B¹, B², B³, B⁴ étant chacun indépendamment les uns des autres choisis dans le groupe constitué par :
une liaison directe,
&-(CH₂)ₚ₁-&&, p1 étant un nombre entier de 1 à 3, &-B⁵-CH₂-&&, avec B⁵ = phénylène,
&-(CH₂)_{q1}-B⁶-(CH₂)_{q2}-&&, avec B⁶ = O, S ; q1 = 0, 1, 2 et q2 = 1, 2, 3, avec q1 + q2 ≤ 3, &-O-C(=O)-NH-CH₂-&&.

3. Polymère selon la revendication 2, dans lequel R¹ = R³, R² = R⁴ R¹⁹ = R²¹, R²⁰ = R²³, R³¹ = R³⁴, R³² = R³⁵.

4. Polymère selon la revendication 3, dans lequel R¹ = R³ = H, R² = R⁴ = groupe alkyle de 1 à 8 atomes de carbone, R¹⁹ = R²¹ = H, R²⁰ = R²³ = groupe alkyle de 1 à 8 atomes de carbone, R³¹ = R³⁴ = H, R³² = R³⁵ = groupe alkyle de 1 à 8 atomes de carbone, et B¹, B², B³, B⁴ sont chacun choisis indépendamment les uns des autres dans le groupe constitué par une liaison directe, méthylène, éthylène, n-propylène, &-B⁵-CH₂-&&, avec B⁵ = 1,4-phénylène.

5. Polymère selon la revendication 4, dans lequel R¹ = R³ = H, R² = R⁴ = groupe alkyle de 1 à 6 atomes de carbone, R¹⁹ = R²¹ = H, R²⁰ = R²³ = groupe alkyle de 1 à 6 atomes de carbone, R³¹ = R³⁴ = H, R³² = R³⁵ = groupe alkyle de 1 à 6 atomes de carbone.

6. Polymère selon la revendication 5, dans lequel R¹ = R³ = H, R² = R⁴ = groupe tert-butyle, R¹⁹ = R²¹ = H, R²⁰ = R²³ = groupe tert-butyle, R³¹ = R³⁴ = H, R³² = R³⁵ = groupe tert-butyle.

7. Utilisation des polymères selon l'une quelconque des revendications 1 à 6 en tant que matériau d'électrode à activité redox pour des stockeurs de charges électriques.

8. Utilisation des polymères selon l'une quelconque des revendications 1 à 6 dans une suspension d'électrode pour stockeurs de charges électriques.
